# EUROPEAN PATENT APPLICATION

(11) **EP 2 727 497 A1**
(43) Date of publication of application: **07.05.2014**
(21) Application number: 12804376.7
(22) Date of filing: 27.06.2012
(51) Int. Cl.: A47C 7/62, A47C 7/30, B60N 2/44, B60N 2/70

(54) **SEATING SENSOR AND SEAT DEVICE**

(30) Priority: 30.06.2011 JP 2011146868
(71) Applicant: Fujikura Ltd., Tokyo 135-8512 (JP)
(72) Inventor: NAKAZAKI Shigeru, Sakura-shi Chiba 285-8550 (JP)
(74) Representative: Grünecker, Kinkeldey, Stockmair & Schwanhäusser
(86) International application number: PCT/JP2012/066443
(87) International publication number: WO 2013/002289

(57) **Abstract**

The seating sensor includes a pedestal 6 that is supported by at least one of a plurality of support springs 92 stretched out in seat frames 91a and 91b and formed of wire rods including bent portions, and pressure sensitive switches 40A to 40F that are disposed on the pedestal 6. The pedestal 6 includes a non-linear recess 7 to which the bent portion of at least one support spring 92 can be fitted. Since the pedestal can be disposed so as to cross the bent portion of the spring when the bent portion of the spring is fitted to the recess, the pressure sensitive switches, which are disposed on the pedestal, can be stably disposed on the springs formed of the wire rods.

## Description

### Technical Field

The present invention relates to a seating sensor and a seat device that can appropriately detect seating while preventing discomfort.

### Background Art

An alarm system, which warns that a seat belt is not yet fastened when a person gets in a vehicle, is put to practical use as one of safety systems of a vehicle. In this alarm system, an alarm is sounded when the seating of a person is sensed and a seat belt is not yet fastened. There is a case in which a seating sensor, which senses a load caused by seating, is used to sense the seating of a person.

Patent Document 1 discloses a seat device that is provided with this seating sensor. The seating sensor of the seat device disclosed in Patent Document 1 includes a plurality of ON/OFF pressure sensitive switches, and is disposed between a seat skin of the seat device and a cushion pad covered with the seat skin. When pressure is applied to the respective pressure sensitive switches, the pressure sensitive switches are turned on. Accordingly, the seating a person is detected in this seating sensor.

### Citation List

### Patent Document

[Patent Document 1] Japanese Patent Application Laid-Open No. 09-315199

### Summary of Invention

### Objects to be Achieved by the Invention

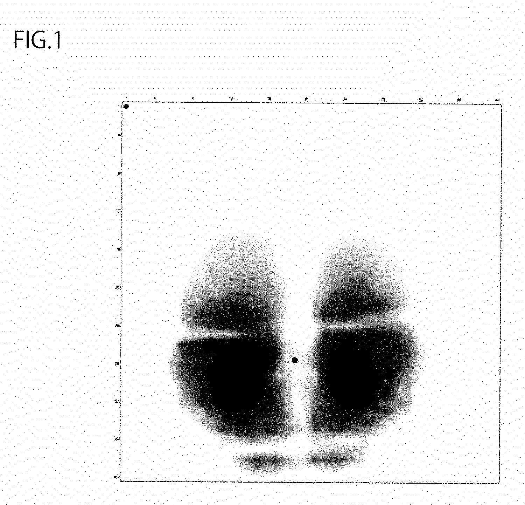

FIG. 1 is a diagram illustrating the distribution of a load that is applied to a cushion pad when a person is normally seated. In FIG. 1, it is found that a portion of the cushion pad having a dark color receives a large load. When a person is seated, only the seat skin is interposed between the person and the cushion pad. Accordingly, as illustrated in FIG. 1, the largest load is applied to a portion of the cushion pad on which the hip of the person is positioned. Further, since the pressure sensitive switches are disposed at the portion of the cushion pad on which the hip of the person is positioned, the seating sensor disclosed in Patent Document 1 can detect the seating of the person.

However, since the pressure sensitive switches of the seating sensor disclosed in Patent Document 1 are disposed between the seat skin of the seat device and the cushion pad that is covered with the seat skin, there is a case that the pressure sensitive switches give a feeling, which is different from a feeling caused by the cushion pad, to a seated person as discomfort.

Accordingly, an object of the invention is to provide a seating sensor and a seat device that can appropriately detect seating while preventing discomfort.

### Means for Achieving the Objects

The inventor examined thoroughly the prevention of discomfort that is caused by the pressure sensitive switches as described above. As a result, the inventor reached a conclusion that it is preferable that the pressure sensitive switches be disposed on a plate that is installed below the seat device as a placing table for the cushion pad. This plate is called a seat pan, and is generally formed by sheet-metal working. When the pressure sensitive switches are disposed on the seat pan as described above, the pressure sensitive switches are interposed between the seat pan and the cushion pad. Accordingly, giving discomfort, which is caused by the pressure sensitive switches, to the seated person is prevented.

However, in the seat device, there is a case in which a plurality of springs formed of wire rods are stretched out in an opening of a frame that forms a seat frame and the cushion pad is placed on the springs. In this case, the pressure sensitive switches did need to be provided so as to be capable of appropriately detecting seating. Therefore, the inventor has further carefully examined this problem and contrived the invention. Therefore, the inventor has further carefully examined this problem and contrived the invention.

A seating sensor of the invention includes a pedestal that is fixed to at least one of a plurality of springs stretched out in an opening surrounded by a seat frame and formed of wire rods including bent portions, and pressure sensitive switches that are disposed on the pedestal. The pedestal includes a non-linear recess to which the bent portions of one or more springs are fitted.

In this seating sensor, the pressure sensitive switches disposed on the pedestal are interposed between the plurality of springs and the cushion pad that is placed on these springs when the recess is fitted to the bent portion of the spring so that the pedestal is fixed to the spring. Accordingly, it is possible to prevent discomfort that is caused by the pressure sensitive switches.

Further, the recess is formed in a non-linear shape so that the bent portions of the one or more springs can be fitted to the recess. Accordingly, when the recess is fitted to the bent portion of the spring so that the pedestal is fixed to the spring, the pedestal can be disposed so as to cross the bent portion of the spring. Accordingly, it is possible to significantly suppress the shift of the pedestal in the longitudinal direction of the spring. Further, the inclination of the pressure sensitive switch, which is disposed on the pedestal, with respect to the spring formed of a wire rod is reduced, so that it is possible to suppress the degradation of the sensitivity of the pressure sensitive switch. In addition to this, not only a pressing force that is applied from the cushion pad but also a biasing force of the spring that resists the pressing force acts on the pressure sensitive switch, so that the sensitivity of the pressure sensitive switch per unit pressing force becomes good.

According to the seating sensor, it is possible to appropriately detect seating in this way.

Furthermore, it is preferable that the recess be formed in a non-linear shape so that the bent portion of one spring can be fitted to the recess.

When the recess is formed in a non-linear shape so that the bent portions of two or more springs can be fitted to the recess, the pedestal is disposed so as to cross two or more springs if the recess is fitted to the bent portions so that the pedestal is fixed to the springs. However, in this case, two or more spring portions on which the pedestal is disposed are restrained by the pedestal. Accordingly, even though a load is applied to the springs from the cushion pad, the free deformation of the spring portions within a predetermined range deteriorates. As a result, since an excessive load is applied to other spring portions, there is a concern that the durability of the spring deteriorates. Further, since the pedestal restrains the springs to be deformed, an excessive load is also applied to the pedestal. For this reason, there is also a concern that the durability of the pedestal deteriorates.

Furthermore, it is preferable that the recess be formed in a non-linear shape so that one of the bent portions can be fitted to the recess.

When the recess is formed in a non-linear shape so that two or more bent portions of one spring can be fitted to the recess, the pedestal is disposed so as to cross two or more bent portions if the recess is fitted to the two or more bent portions so that the pedestal is fixed to the spring. However, in this case, the area of the spring occupied by the pedestal is relatively large and the two or more bent portions on which the pedestal is disposed are restrained by the pedestal, so that the free deformation of the spring within a predetermined range deteriorates. Accordingly, there is a concern that the durability of the spring and the pedestal deteriorates as in the above-mentioned case.

In this regard, when the recess is formed in a non-linear shape so that one bent portion can be fitted to the recess, the pedestal is not disposed so as to cross two or more bent portions. Accordingly, it is possible to improve the durability of the spring and the pedestal.

Moreover, the seating sensor may further include frame members that are connected to the pedestal and are provided at portions facing each other with at least the pressure sensitive switches interposed therebetween, and upper ends of the frame members may be positioned above an upper surface of the pressure sensitive switch.

When the pedestal is fixed to the spring, on which the cushion member is placed, through the recess, the frame members connected to the pedestal can support the cushion pad by using the pedestal as a support while forming a gap between the cushion pad and the pressure sensitive switch. Accordingly, false detection caused by the turning-on of the pressure sensitive switch is suppressed in a state in which pressure is not applied to the cushion pad, a case in which a burden lighter than a person is placed on the cushion pad, and the like.

Further, it is also possible to control the contact pressure between the pressure sensitive switch and the lower surface of the cushion pad by adjusting the gap between the lower surface of the cushion pad and the pressure sensitive switch, which is obtained when pressure is not applied to the cushion pad, by the heights of the frame members.

Furthermore, it is preferable that the frame members be formed of a pair of frame members facing each other with the pressure sensitive switches interposed therebetween.

When the frame members are provided so as to surround the whole circumference of the pressure sensitive switch, the pressure sensitive switch is surrounded by the frame members and the pedestal. For this reason, when the wires connected to the pressure sensitive switch are to be led to the outside of the frame members, it is necessary to make the wires pass through the gap between the upper ends of the frame members and the lower surface of the cushion pad or pass through the frame members. However, when the wires are led through the gap between the upper ends of the frame members and the lower surface of the cushion pad, there is a possibility that the durability of the wires deteriorates. Meanwhile, when the wires are led through the frame members, there is a possibility that the strength of the frame member itself is reduced, the wires are complicated, or the like.

In this regard, when the pair of frame members facing each other with the pressure sensitive switches interposed therebetween are employed, areas except for the pair of frame members, which face each other, form spaces on the sides of the pressure sensitive switch. Accordingly, it is possible to lead the wires to the outside of the frame members through the spaces without the above-mentioned possibility.

Further, it is preferable that the recess be formed in the shape of a groove and the width of a portion where the width of the groove becomes maximum be substantially the same as the diameter of the spring.

In this case, since the spring portion can be fitted to the groove so as to correspond to the outer periphery of the spring, the movement of the spring in the width direction of the groove is restricted when the spring portion is fitted to the groove. Accordingly, according to the seating sensor, it is possible to significantly reduce a horizontal shake that occurs on the pressure sensitive switch disposed on the seating surface side of the pedestal.

Furthermore, it is preferable that the seating sensor further include a cushion member that is provided between the pedestal and the pressure sensitive switch disposed on the pedestal.

When the seating sensor further includes the cushion member and the pressure sensitive switch is positioned on the spring portion, even though forces to be applied to the pressure sensitive switches are non-uniform, the forces are transmitted to the pressure sensitive switches after a difference between the forces is reduced. Thus, according to the seating sensor, since the efficiency of the transmission of the forces applied to the pressure sensitive switches, which depends on the non-uniformity of the applied forces, is improved, the sensitivity of the pressure sensitive switches is further improved. Further, the deterioration of the durability of the pressure sensitive switch is further reduced by the cushioning properties of the cushion member.

Moreover, the seating sensor may further include a pair of the pedestals, and a pair of pressure sensitive switches that are disposed on the respective pedestals. The pressure sensitive switch may include a pair of insulating sheets having flexibility, a sheet-like spacer which is interposed between the pair of insulating sheets and in which an opening is formed, and a pair of electrodes that are provided on surfaces of the pair of insulating sheets and face each other through the opening. The spacers of the pair of pressure sensitive switches disposed on the respective pedestals may be connected to each other and the pair of insulating sheets may be connected to each other.

When the spacers of the pair of pressure sensitive switches disposed on the respective pedestals are not connected to each other and the pair of insulating sheets are not connected to each other, conductive wires are necessary for the connection between the electrodes of the pressure sensitive switches and contacts between the electrodes and the conductive wires are necessary.

In this regard, when the spacers of the pair of pressure sensitive switches disposed on the respective pedestals are connected to each other and the pair of insulating sheets are connected to each other, the electrodes of the pressure sensitive switches can be print-wired on the insulating sheets. For this reason, it is possible to connect the electrodes of the pressure sensitive switches without contacts between the electrodes and the conductive wires. Accordingly, it is possible to reduce poor electric contact as that much.

Further, the seating sensor may further include a plurality of the pedestals, a plurality of pressure sensitive switches that disposed on the respective pedestals, and conductive wires that have flexibility and connect the respective pressure sensitive switches.

In this case, since the pressure sensitive switches disposed on the plurality of pedestals are connected to each other by the conductive wires having flexibility, the positions where the respective pedestals are to be disposed can be freely selected without rewiring. Accordingly, according to the seating sensor, it is possible to dispose the respective pedestals at positions where the sensitivity of the pressure sensitive switches is good, respectively.

Furthermore, it is preferable that one pedestal be used as the pedestals. In this case, it is possible to reduce a space, which is occupied by the pedestal below the cushion pad, as compared to a case in which the plurality of pedestals are used. As a result, it is possible to easily secure a space that is occupied by electronic components and the like to be dispsoed below the cushion pad.

Moreover, it is preferable that one pressure sensitive switch be used as the pressure sensitive switches when one pedestal is used as the pedestals. In this case, since it is possible to avoiding connecting the pressure sensitive switches by the above-mentioned conductive wires or connecting the above-mentioned spacers and the above-mentioned insulating sheets, it is possible to reduce poor electric contact and to save a space as that much.

Further, a seat device according to the invention may include a plurality of springs that are stretched out in an opening surrounded by a seat frame and are formed of wire rods including a plurality of bent portions, a cushion pad that is placed on the plurality of springs, and any one of the above-mentioned seating sensors.

In this seat device, the pressure sensitive switches disposed on the pedestals are interposed between the plurality of springs and the cushion pad placed on these springs. Accordingly, it is possible to prevent discomfort that is caused by the pressure sensitive switches.

Furthermore, since the recess of the pedestal is formed in a non-linear shape so that the bent portions of at least one spring can be fitted to the recess, the pedestal is disposed so as to cross the bent portions of the spring. Accordingly, it is possible to significantly suppress the shift of the pedestal in the longitudinal direction of the spring. Further, the inclination of the pressure sensitive switch, which is disposed on the pedestal, with respect to the spring formed of a wire rod is reduced, so that it is possible to suppress the degradation of the sensitivity of the pressure sensitive switch. In addition to this, not only a pressing force that is applied from the cushion pad but also a biasing force of the spring that resists the pressing force acts on the pressure sensitive switch, so that the sensitivity of the pressure sensitive switch per unit pressing force becomes good.

According to the seat device, it is possible to appropriately detect seating in this way.

Moreover, it is preferable that the frame members be formed of a pair of frame members facing each other with the pressure sensitive switches interposed therebetween and the pair of frame members be disposed along a front-and-rear direction of the cushion pad.

Forces applied from legs extending forward from the hip acts when a person is seated on the cushion pad, or a force of a backrest pushing the back acts when the seat device is provided with the backrest. Accordingly, pressure is applied to the lower surface of the cushion pad not only in the vertical direction of the hip of the person but also in the forward direction.

The cushion pad is bent so as to enter the inside of the frame members on the lower surface of the cushion pad when this pressure is applied. Accordingly, the cushion pad acts on the pressure sensitive switch. The inventor found that the bending amount of the cushion pad, which acts on the pressure sensitive switch, is increased when the pair of frame members are disposed along the front-and-rear direction of the cushion pad as compared to a case in which the pair of frame members are disposed along the left-and-right direction of the cushion pad.

The reason for this is that pressure applied in the front-and-rear direction of the lower surface of the cushion pad can be directly transmitted as compared to a case in which the pair of frame member are disposed along the left-and-right direction of the cushion pad, since a space between the frame members disposed along the front-and-rear direction of the cushion pad is opened.

Accordingly, since it is possible to further increase the contact pressure between the pressure sensitive switch and the lower surface of the cushion pad, it is possible to more appropriately detect seating.

Further, it is preferable that the frame members be formed of a pair of frame members facing each other with the pressure sensitive switches interposed therebetween and the pair of frame members be disposed along a left-and-right direction of the cushion pad.

When a person is seated on the cushion pad, pressure is applied to the lower surface of the cushion pad not only in the vertical direction of the hip of the person but also in the forward direction. Accordingly, there is generated difference in the distribution of pressure where pressure applied to the rear side is higher than pressure applied to the front side.

The inventor found that pressure, which is applied to the pressure sensitive switch from the lower surface of the cushion pad when this pressure is applied, is easily and uniformly added in the vertical direction as compared to a case in which the pair of frame member are disposed along the front-and-rear direction of the cushion pad.

The reason for this is that the difference in the distribution of pressure where pressure applied to the rear side is higher than pressure applied to the front side is reduced by the frame member positioned at the rear of the seat device when the pair of frame members are disposed along the left-and-right direction of the cushion pad.

Accordingly, it is possible to easily control the contact pressure between the pressure sensitive switch and the lower surface of the cushion pad as compared to a case in which the frame member are disposed along the front-and-rear direction of the cushion pad.

Further, it is preferable that pad recesses be formed on a lower surface of the cushion pad above the frame members and the pressure sensitive switches and at least the frame members be received in the pad recesses.

In this case, it is possible to prevent a cushion portion, which is positioned above the pressure sensitive switch, from being bent so as to enter the inside of the pair of frame members when pressure is not applied to the cushion pad. Accordingly, it is possible to further suppress false detection as compared to a case in which the pair of frame members not received in the pad recess that is formed above the pressure sensitive switch.

Further, it is possible to reduce the self-weight of the cushion pad that is applied to the pair of frame members supporting the cushion pad, as compared to a case in which the pair of frame members are not received in the pad recess that is formed above the pressure sensitive switch. Accordingly, it is also possible to improve the durability of the seating sensor.

### Effect of Invention

As described above, according to the invention, there are provided a seating sensor and a seat device that can appropriately detect seating while preventing discomfort.

### Brief Description of Drawings

FIG. 1 is a diagram illustrating the distribution of a load that is applied to a cushion pad when a person is normally seated in a seat.
FIG. 2 is a perspective view illustrating a seating sensor of a first embodiment.
FIG. 3 is an exploded view illustrating the structure of a sensor section of the first embodiment.
FIG. 4 is a diagram illustrating an aspect of the sensor section of the first embodiment that is viewed from above and an aspect of the cross-section of the sensor section.
FIG. 5 is a diagram illustrating an equivalent circuit of the sensor section of the first embodiment.
FIG. 6 is a diagram illustrating an aspect of a pedestal of the first embodiment.
FIG. 7 is a diagram illustrating aspects of a seat device of the first embodiment that are viewed from directly above and from a lateral direction.
FIG. 8 is a diagram illustrating an aspect of the cross-section taken along line Y-Y of FIG. 7A.
FIG. 9 is a diagram illustrating an aspect of a pressure sensitive switch that is turned on with the same viewpoint as FIG. 8.
FIG. 10 is a diagram illustrating the result of a simulation of a state in which the lower surface of the cushion pad is bent when a pair of frame members are disposed along the front-and-rear direction of the cushion pad.
FIG. 11 is a diagram illustrating the result of a simulation of a state in which the lower surface of the cushion pad is bent when the pair of frame members are disposed along the left-and-right direction of the cushion pad.
FIG. 12 is a conceptual diagram illustrating the distribution of a load that is applied to a seat frame and support springs through the cushion pad when a person is normally seated in the seat device.
FIG. 13 is a perspective view illustrating a seating sensor of a second embodiment.
FIG. 14 is a plan view illustrating a first electrode sheet of the second embodiment.
FIG. 15 is a plan view illustrating a second electrode sheet of the second embodiment.
FIG. 16 is a plan view illustrating a spacer of the second embodiment.
FIG. 17 is a diagram illustrating a state in which the first electrode sheet, the spacer, and the second electrode sheet are superimposed which is viewed from a vertical direction.
FIG. 18 is a diagram illustrating an aspect of the cross-section taken along line V-V of FIG. 17.
FIG. 19 is a circuit diagram illustrating the circuit configuration of a sensor section of the second embodiment by an equivalent circuit.
FIG. 20 is a plan view illustrating a pedestal of the second embodiment that is viewed from one side.
FIG. 21 is a diagram illustrating an aspect of the cross-section taken along line U-U of FIG. 20.
FIG. 22 is a diagram illustrating an aspect of a seat device of the second embodiment.
FIG. 23 is a diagram illustrating an aspect of a pressure sensitive switch that is turned on in a state in which a support spring is fitted to a spring groove of the pedestal and the seating sensor is disposed on the support spring, with the same viewpoint as FIG. 18.
FIG. 24 is a plan view illustrating a seating sensor of a third embodiment.
FIG. 25 is a plan view illustrating a first electrode sheet of the third embodiment.
FIG. 26 is a plan view illustrating a second electrode sheet of the third embodiment.
FIG. 27 is a plan view illustrating spacers of the third embodiment.
FIG. 28 is a diagram illustrating an aspect of the cross-section taken along line T-T of FIG. 24.
FIG. 29 is a diagram illustrating an aspect of the structure of the cross-section of a conductive wire of FIG. 24 perpendicular to a longitudinal direction.
FIG. 30 is a circuit diagram illustrating the circuit configuration of a first sensor section, a second sensor section, and a conductive wire by an equivalent circuit.
FIG. 31 is a diagram illustrating a seat device of the third embodiment.
FIG. 32 is a diagram illustrating aspects of the cross-sections of springs and a pedestal corresponding to a width direction of a cushion pad.
FIG. 33 is a diagram illustrating a spring groove of another embodiment.
FIG. 34 is a diagram illustrating a recess of another embodiment.
FIG. 35 is a diagram illustrating a seating sensor and a seat device of another embodiment with the same viewpoint as FIG. 7A.

### Description of Embodiments

### (First embodiment)

A preferred first embodiment of the invention will be described in detail with reference to the drawings.

### <As for the seating sensor>

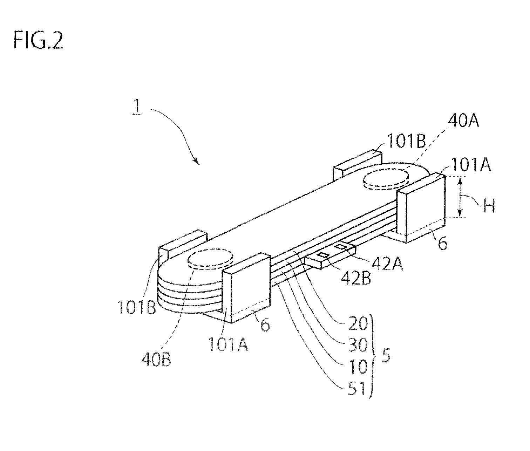

FIG. 2 is a perspective view illustrating a seating sensor 1 of a first embodiment. As illustrated in FIG. 2, the seating sensor 1 includes a sensor section 5 that includes a plurality of pressure sensitive switches 40A and 40B, a plurality of pedestals 6 in which the respective pressure sensitive switches 40A and 40B are disposed, and a pair of frame members 101A and 101B that are connected to the pedestals, as main components.

### <As for the sensor section>

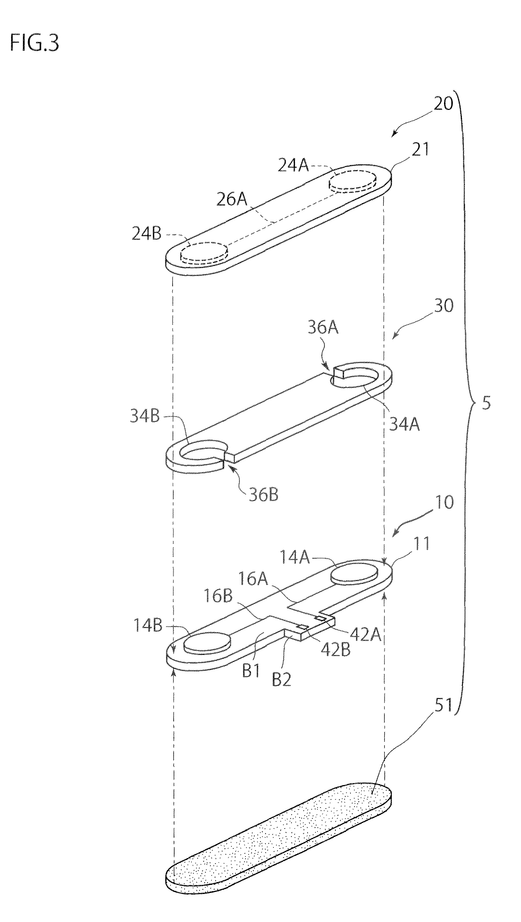

FIG. 3 is an exploded view illustrating the structure of the sensor section 5 of the first embodiment. As illustrated in FIG. 3, the sensor section 5 includes a first electrode sheet 10, a second electrode sheet 20, a spacer 30, and a cushion member 51, as main components.

The first electrode sheet 10 includes a first insulating sheet 11, a plurality of first electrodes 14A and 14B, and a pair of terminals 42A and 42B, as main components.

The first insulating sheet 11 is formed of a film-like insulating sheet having flexibility, and is formed in, for example, a rectangular shape. In the case of this embodiment, the first insulating sheet 11 includes a base block B1 on which the first electrodes 14A and 14B are to be disposed and a tail block B2 on which the terminals 42A and 42B are to be disposed. The base block B1 is formed of a strip-shaped block, and the tail block B2 is formed of a strip-shaped block that is smaller than the base block B1 and protrudes from an end portion of the middle portion of the base block B1 in a longitudinal direction.

For example, the first electrodes 14A and 14B are formed in a substantially circular shape. The first electrodes 14A and 14B are disposed on one surface of the base block B1. In this embodiment, the first electrode 14A is disposed on one end portion of the base block B1 and the first electrode 14B is disposed on the other end portion of the base block B1. These first electrodes 14A and 14B are symmetrical with respect to a line that passes through the center of the first insulating sheet 11 in the longitudinal direction and is perpendicular to the longitudinal direction.

The pair of terminals 42A and 42B are formed in, for example, a substantially quadrangular shape. These terminals 42A and 42B are disposed on the same surface of the tail block B2 as the surface on which the first electrodes 14A and 14B are disposed.

The first electrode 14A and the terminal 42A are electrically connected to each other by a first wire 16A, and the first electrode 14B and the terminal 42B are electrically connected to each other by a first wire 16B.

The second electrode sheet 20 includes a second insulating sheet 21 and a plurality of second electrodes 24A and 24B.

The second insulating sheet 21 is formed of a film-like insulating sheet having flexibility, and is formed in, for example, a rectangular shape having the same shape and size as the base block B1 of the first insulating sheet 11.

For example, the second electrodes 24A and 24B are formed in a substantially circular shape. The second electrodes 24A and 24B are disposed on one surface of the base block B1. In the case of this embodiment, the sizes of the second electrodes 24A and 24B are the same as those of the first electrodes 14A and 14B. Further, the second electrodes 24A and 24B are disposed at positions, which completely overlap the first electrodes 14A and 14B on the side of the second insulating sheet 21 facing the surface of the first electrode sheet 10 when the second electrode sheet 20 and the first electrode sheet 10 are superimposed, respectively. The second electrodes 24A and 24B are electrically connected to each other by a second wire 26A.

The spacer 30 is formed of a film-like insulating sheet, and includes a plurality of openings 34A and 34B. In the case of this embodiment, the spacer 30 is formed in, for example, a rectangular shape having the same shape and size as the base block B1 of the first insulating sheet 11.

The peripheral edge shapes of the openings 34A and 34B are, for example, substantially circular shapes, and the diameters of the openings 34A and 34B are slightly smaller than the diameters of the first electrodes 14A and 14B. Further, the positions of the openings 34A and 34B are set so that the first electrodes 14A and 14B are received in the respective openings 34A and 34B when the spacer 30 is superimposed on the first electrode sheet 10 and is viewed from a direction perpendicular to the spacer 30.

Slits 36A and 36B, which are spatially connected to the outside of the spacer 30, are formed at the respective openings 34A and 34B. That is, one ends of the respective slits 36A and 36B are connected to the corresponding openings 34A and 34B, and the other ends thereof are opened to the outside of the spacer 30.

The cushion member 51 is an elastic member that is deformed so as to be crushed when pressure is applied thereto. In the case of this embodiment, the cushion member 51 is formed in a substantially rectangular parallelepiped shape, and the wide surface of the cushion member 51 is the same as the wide surface of, for example, the base block B1 of the first insulating sheet 11.

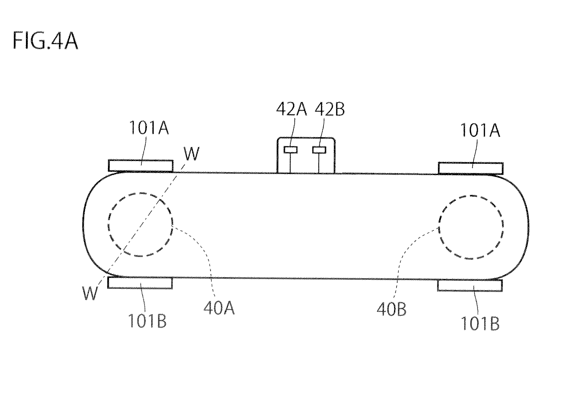

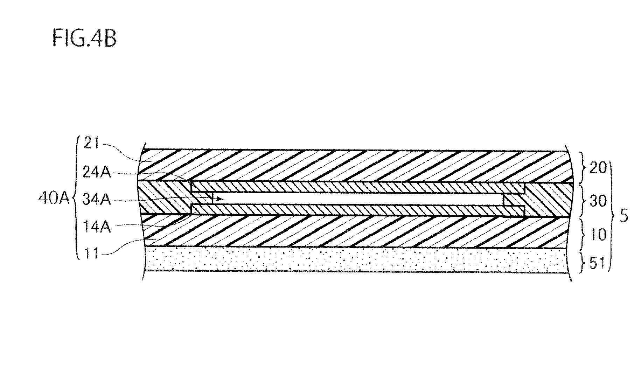

FIG. 4 is a diagram illustrating an aspect of the sensor section 5 of the first embodiment that is viewed from above and an aspect of the cross-section of the sensor section 5. Specifically, FIG. 4A is a diagram illustrating an aspect of the sensor section 5 that is viewed from above, and FIG. 4B is a diagram illustrating an aspect of the cross-section taken along line W-W of FIG. 4A.

As illustrated in FIG. 4B, the first electrode sheet 10 is attached to one surface of the spacer 30 and the second electrode sheet 20 is attached to the other surface of the spacer 30. Further, the cushion member 51 is attached to the surface of the first insulating sheet 11 opposite to the surface of the first insulating sheet 11 facing the spacer 30, so that the sensor section 5 is formed.

In the sensor section 5, a part of the pair of insulating sheets 11 and 21, a spacer portion that is interposed between these sheet portions, and the pair of electrodes 14A and 24A that face each other through the opening 34A formed in the spacer portion form the pressure sensitive switch 40A. Meanwhile, the portions of the insulating sheets 11 and 21 are portions on which at least the electrodes are disposed.

Furthermore, in the sensor section 5, the pressure sensitive switch 40B illustrated in FIG. 4A is formed in the same manner as the pressure sensitive switch 40A. The insulating sheets and the spacer, which are components of these pressure sensitive switches 40A and 40B, are a part of a pair of insulating sheets 11 and 21 and a part of the spacer 30 in this embodiment, but insulating sheets and a spacer, which are formed of separate bodies for corresponding portions, may be connected by a predetermined connector.

Meanwhile, in the sensor section 5 of this embodiment, the side on which the terminals 42A and 42B are disposed is a front side and the side opposite to this side is a rear side. Further, the surface of the second insulating sheet 21 opposite to the surface of the second insulating sheet 21 facing the spacer 30 is an upper surface and the surface of the cushion member 51 opposite to the surface of the cushion member 51 facing the first insulating sheet 11 is a lower side.

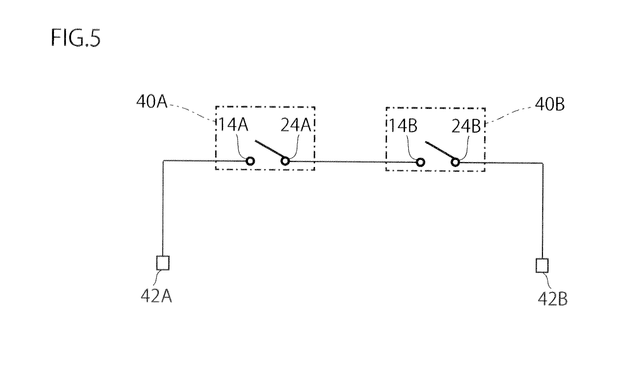

FIG. 5 is a diagram illustrating an equivalent circuit of the sensor section 5 of the first embodiment. As illustrated in FIG. 5, the pressure sensitive switches 40A and 40B are electrically connected to each other in series, and are disposed between the pair of terminals 42A and 42B.

### <As for the pedestal>

As illustrated in FIG. 1, the pedestal 6 is fixed to a portion, which is positioned below the pressure sensitive switch 40A or 40B, of the lower surface of the sensor section 5 (the surface of the cushion member 51 opposite to the surface of the cushion member 51 facing the first insulating sheet 11) by, for example, an adhesive.

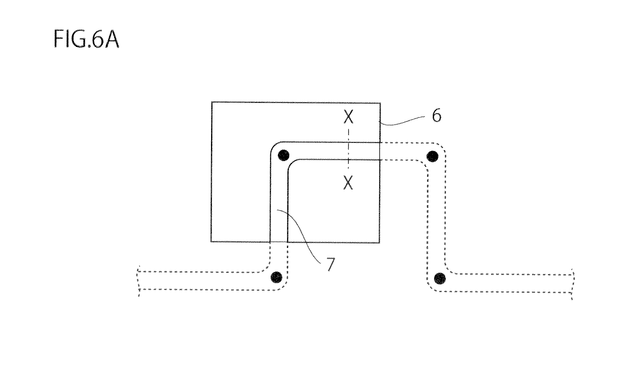

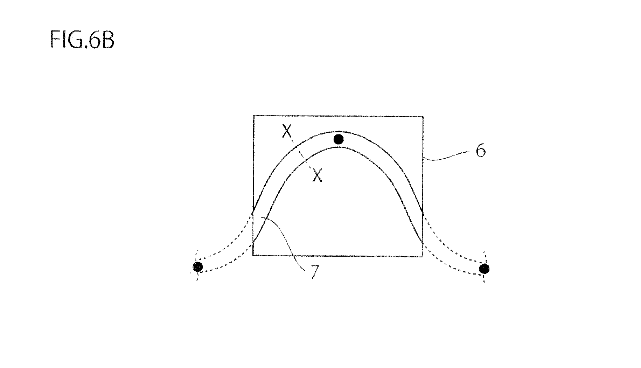

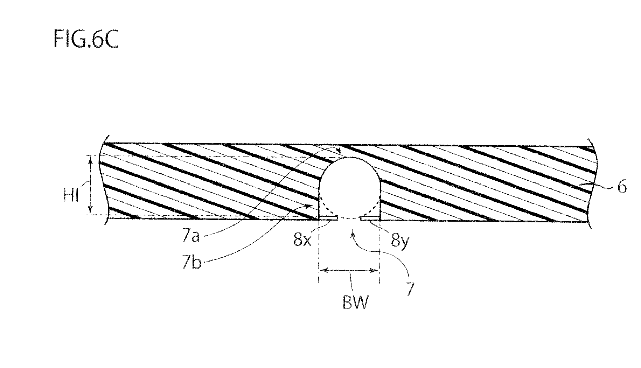

A recess (hereinafter, referred to as a spring groove), which is detachably mounted on a part of a spring supporting a cushion pad of a seat device, is formed on the lower surface of the pedestal 6. FIG. 6 is a diagram illustrating an aspect of the pedestal 6 of the first embodiment. Specifically, FIGS. 6A and 6B are diagrams illustrating an example of the spring groove that is formed on the lower surface of the pedestal 6, and FIG. 6C is a diagram illustrating an aspect of the cross-section taken along line X-X of FIG. 6A or 6B.

As illustrated in FIGS. 6A and 6B, the spring groove 7 of this embodiment is formed in a non-linear shape that corresponds to one bent portion of one support spring.

For example, when the support spring is bent in a U shape at a plurality of portions on a linear portion as illustrated in FIG. 6A, the spring groove 7 is formed in a shape corresponding to a bent portion between a spring position that reaches the next maximum point close to one end of the support spring from one maximum point, which serves as a reference, among maximum points (bending centers having locally large angles) illustrated by round dots and a spring position that reaches the next maximum point close to the other end of the support spring from the reference maximum point.

Further, when the support spring is bent in the shape of a sine wave as illustrated in FIG. 6B, the spring groove 7 is formed in a shape corresponding to a bent portion between a spring position that reaches the next maximum point close to one end of the support spring from one maximum point, which serves as a reference, among maximum points illustrated by round dots and a spring position that reaches the next maximum point close to the other end of the support spring from the reference maximum point.

Meanwhile, in terms of the stabilization of the pedestal 6, it is preferable that the spring groove 7 have a non-linear shape corresponding to a bent portion, which forms a relatively large angle, of the bent portion of the support spring. Both ends of the spring groove 7 are opened to the sides of the pedestals 6 that face each other. Accordingly, the spring groove 7 allows a bent portion, which is formed in the middle portion of the spring stretched out along the bottom of the cushion pad, to be fitted to one surface of the pedestal 6, and allows a bent portion, which is to be fitted, to be intuitively perceived according to the shape of the spring groove 7 formed on the pedestal 6.

As illustrated in FIG. 6C, the shape of a bottom portion 7a of the spring groove 7 is the same as the semi-circular arc shape of the vertical cross-section of the support spring. Meanwhile, side portions 7b of the spring groove 7 are parallel to each other, and a distance BW between the side portions 7b (the width of the spring groove) is substantially the same as the diameter of the support spring.

Furthermore, a pair of convex portions 8x and 8y, which protrude toward the opposite edges of the groove, are connected to the longitudinal edges of the spring groove 7. These convex portions 8x and 8y are formed of plates that are made of a resin having elasticity, and face each other with the same interval from the center of the spring groove 7 in the longitudinal direction. The one wide surface of each of these convex portions 8x and 8y is flush with the wide surface of the pedestal 6 on which the spring groove 7 is formed. Moreover, a height HI between a position where the convex portions 8x and 8y protrude toward the spring groove 7 the most and the lowest position of the spring groove 7 is smaller than the diameter of the spring.

### <As for the frame members>

As illustrated in FIG. 1, the pair of frame members 101A and 101B are formed of plate-like members that face each other with the pressure sensitive switch 40A interposed therebetween, and are disposed along a left-and-right direction of the cushion pad of the seat device that is to be provided with the seating sensor 1.

These frame members 101A and 101B are integrally connected to end portions of the pedestal 6 opposite to each other. Further, upper ends of these frame members 101A and 101B are positioned above the upper surface of the sensor section 5 fixed to the pedestals 6. Heights H of the frame members 101A and 101B are equal to each other.

Meanwhile, the frame members 101A and 101B are members that are separate from the pedestal 6, and may be connected by a predetermined connector. When the frame members 101A and 101B are formed of members separate from the pedestal 6, the frame members 101A and 101B have a stiffness higher than the stiffness of the cushion pad of the seat device that is to be provided with the seating sensor 1.

### <As for the seat device>

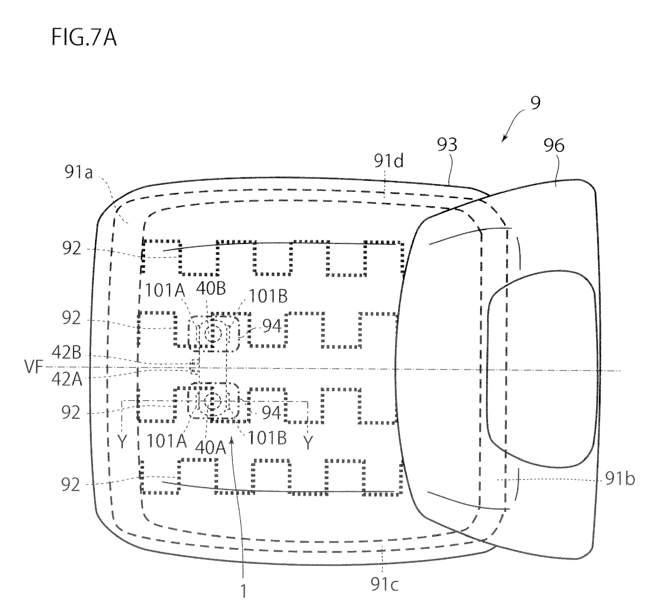

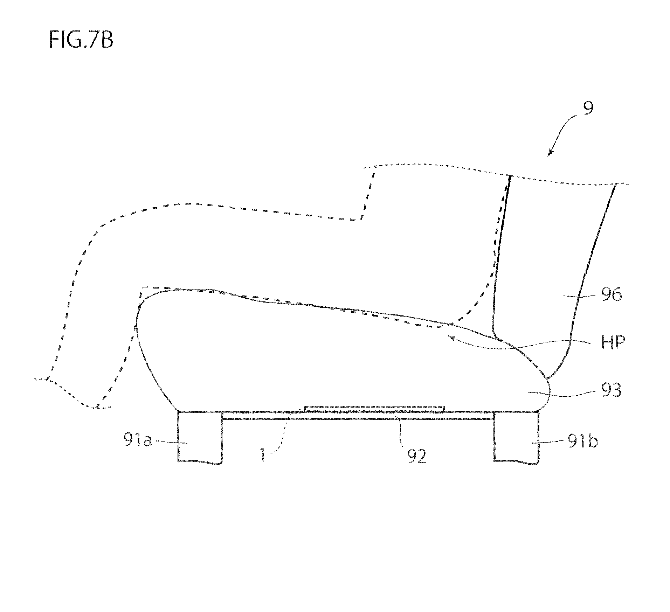

Next, the seat device provided with the above-mentioned seating sensor 1 will be described. FIG. 7 is a diagram illustrating aspects of the seat device 9 of the first embodiment that are viewed from directly above and from a lateral direction. Specifically, FIG. 7A illustrates an aspect of the seat device 9 that is viewed from directly above and FIG. 7B illustrates an aspect of the seat device 9 that is viewed from a lateral direction.

As illustrated in FIGS. 7A and 7B, the seat device 9 includes a seat frame 91, a plurality of support springs 92, a cushion pad 93, a backrest 96, and the seating sensor 1, as main components.

The seat frame 91 is formed as a frame structure including a front frame member 91a which is disposed as a frame of a front portion, a rear frame member 91b which is disposed as a frame of a rear portion, and a pair of side frame members 91c and 91d which are disposed as frames of the left and right portions. Further, the seat frame 91 includes an opening which is surrounded by the members 91a to 91d. The front frame member 91a and the side frame members 91c and 91d are formed as, for example, a product obtained by press-molding a sheet metal. The rear frame member 91b is formed as, for example, a metal pipe having a circular cross-section, and extends in the width direction of the vehicle, so that both ends thereof are connected to the rear ends of the side frame members 91c and 91d.

Each of the support springs 92 is formed of, for example, a wire rod that is repeatedly bent in an S shape on the same plane. Front ends of these support springs 92 are mounted on the front frame member 91a, and rear ends thereof are mounted on the rear frame member 91b. In this way, the plurality of support springs 92 are stretched out on the same plane at a predetermined interval, and are formed as a mat on which the cushion pad 93 is placed.

Meanwhile, the shape of a portion of the support spring 92, which serves as a bending unit, is not limited to an S shape, and various shapes, such as a Z shape, may be applied. Further, the repetition interval of the bent portion of the support spring 92 may be successively repeated, may be repeated at a predetermined interval, and may be repeated at random. Furthermore, the shapes of the bent portions to be repeated may be the same shape, and may be different shapes, such as the combination of an S shape and a Z shape or the combination of U shapes or inverted U shapes. Moreover, the number of times of repetition of the bent portion may be zero, but it is preferable that the number of times of repetition of the bent portion be not zero. Meanwhile, the plurality of support springs 92 have been stretched out in the front-and-rear direction, but may be stretched out in the left-and-right direction or in an oblique direction.

The cushion pad 93 is made of, for example, urethane foam having cushioning properties. Accordingly, the cushion pad 93 has an elastic force and is deformed so as to be crushed when a pressing force is applied thereto. Further, the cushion pad 93 is coated with a surface skin of a cloth (not illustrated). Further, the cushion pad 93 is coated with a surface skin of a cloth (not illustrated).

The backrest 96 is connected to the seat frame 91 by means (not illustrated) so as to come into contact with the cushion pad 93 in the rear of the cushion pad 93.

The seating sensor 1 is disposed on the support springs 92, and is interposed between the support springs 92 and the cushion pad 93. Specifically, each of the spring grooves 7 of the pedestals 6 of the seating sensor 1 is fitted to one bent portion of one support spring 92. In this way, the pedestal 6 is disposed on one bent portion so as to cross a spring portion that extends toward one side from the maximum point of the bent portion as a base point and a spring portion that extends toward the other side.

Meanwhile, in a method of disposing the pedestal 6 on the support spring 92, the pedestal 6 is pressed while a spring portion is butted against the convex portions 8x and 8y (FIG. 6) connected to the edges along a direction where the spring groove 7 is formed. In this case, since the convex portions 8x and 8y have elasticity, open ends of the convex portions 8x and 8y are bent toward the inside of the spring groove 7. Accordingly, the spring portion is fitted to the spring groove 7. In this way, the seating sensor 1 is disposed on the support springs 92.

As described above, the bottom portion 7a (FIG. 6) of the vertical cross-section of the spring groove 7 has substantially the same shape as the semi-circular arc shape of the vertical cross-section of the support spring 92. For this reason, the spring portion can be fitted to the spring groove 7 while a gap is not formed between the bottom portion 7a and the surface of the support spring 92. Further, as described above, the side portions 7b (FIG. 6) of the spring groove 7 are parallel to each other, and the distance BW between the side portions 7b (the width of the groove) is substantially the same as the diameter of the support spring 92. For this reason, the spring groove 7 restricts the movement of the support spring 92 in the width direction of the groove. As a result, a horizontal shake, which occurs on the sensor section 5 disposed on the pedestals 6, is significantly reduced.

Furthermore, the pair of convex portions 8x and 8y, which have elasticity and protrude toward the opposite edges of the groove, are formed at the edges of the spring groove 7. For this reason, the convex portions 8x and 8y make the opening of the spring groove 7 narrow. Accordingly, when the spring portion is fitted to the spring groove 7, the separation of the spring portion from the spring groove 7 can be suppressed. Moreover, the height HI between a position where the convex portions 8x and 8y protrude toward the spring groove 7 the most and the lowest position of the spring groove 7 is smaller than the diameter of the spring. For this reason, the restoring forces of the convex portions 8x and 8y act as a force that presses the spring portion fitted to the spring groove 7. As a result, the convex portions 8x and 8y can significantly suppress the separation of the spring portion from the spring groove 7.

In the case of this embodiment, a pair of pedestals 6 are disposed on the bent portions on the left and right sides of a center line (hereinafter, referred to as a vertical plane) VF, which passes through the center of the cushion pad 93 in the width direction, so as to be symmetrical to each other. Further, the pairs of frame members 101A and 101B, which are connected to these pedestals 6, are disposed along the left-and-right direction of the cushion pad 93.

Furthermore, pad recesses 94 are formed on the lower surface of the cushion pad 93 of this embodiment as illustrated in FIG. 7A.

The positions of the pad recesses 94 include areas that are positioned above the support springs 92, and are symmetrical with respect to the vertical plane VF that passes through the center of the cushion pad 93 in the width direction. Moreover, as illustrated in FIG. 7B, the center of the pad recess 94 in the front-and-rear direction is positioned in front of a hip point HP of a person who is normally seated.

Meanwhile, "normally seated" means that a person is seated so that a back comes into contact with the backrest 96 and a hip is positioned deep into the cushion pad 93, and the "hip point" means a portion, which protrudes to the lowest position, of the hip of a person who is seated.

The pressure sensitive switch 40A is disposed on the left side in the pad recess 94, and the pressure sensitive switch 40B is disposed on the right side in the pad recess 94. Further, these pressure sensitive switches 40A and 40B are disposed above the support springs 92 in the vertical direction.

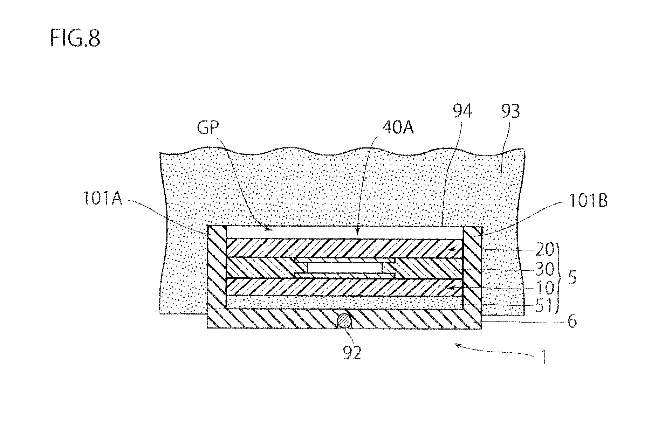

FIG. 8 is a diagram illustrating an aspect of the cross-section taken along line Y-Y of FIG. 7A. As illustrated in FIG. 8, the pair of frame members 101A and 101B and a part of the pedestal 6 connected to these frame members 101A and 101B are received in the space of the pad recess 94.

As described above, the upper ends of the pair of frame members 101A and 101B are positioned above the upper surface of the sensor section 5 fixed to the pedestals 6. For this reason, a gap GP is formed between the upper surface of the sensor section 5 and the lower surface of the cushion pad by the frame members 101A and 101B.

Meanwhile, side surfaces of the pad recess 94 illustrated in FIG. 8 and side surfaces of the frame members 101A and 101B come into contact with each other, but may have gaps therebetween. Further, in terms of the prevention of the position shift of the pressure sensitive switch 40A or in terms of the enhancement of a state in which the support springs 92 are mounted on the pedestals 6, it is preferable that the side surfaces of the pad recess 94 and the side surfaces of the seating sensor come into contact with each other.

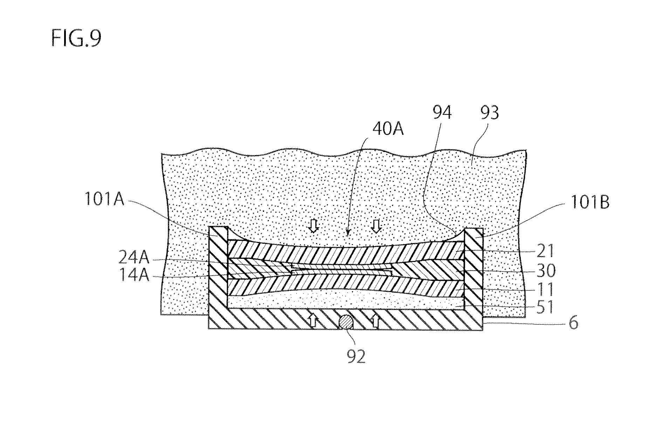

FIG. 9 is a diagram illustrating an aspect of the pressure sensitive switch 40A that is turned on with the same viewpoint as FIG. 8. When a person is seated on the cushion pad 93 of the seat device 9 of this embodiment, pressure is applied to the sensor section 5 from both a cushion pad side and a spring side as illustrated in FIG. 9 (see arrows).

On the cushion pad side, the bottom portion of the pad recess 94 is bent so as to enter the inside of the frame members 101A and 101B. Accordingly, the second insulating sheet 21 of the pressure sensitive switch 40A is pressed downward.

Meanwhile, on the spring side, the pedestals 6 disposed below the sensor section 5 are hardly bent. However, the cushion member 51 is attached to the lower surface of the first insulating sheet 11 of the sensor section 5. For this reason, the cushion member 51 of the sensor section 5 is bent so as to correspond to the bottom portion of the pad recess 94 regardless of the degree of stiffness of the pedestal 6. Accordingly, the first insulating sheet 11 of the pressure sensitive switch 40A is pressed upward.

Since the first and second insulating sheets 11 and 21, which are pressed in this way, have flexibility, the first and second insulating sheets 11 and 21 are bent so as to enter the opening 34A of the spacer 30. Since the first and second insulating sheets 11 and 21 are bent in this way, the first and second electrodes 14A and 24A, which face each other through the opening 34A, come into contact with each other at a predetermined pressure. In this way, the pressure sensitive switch 40A is turned on.

Meanwhile, it is possible to adjust the pressing amount of the first insulating sheet 11 according to the thickness or material of the cushion member 51. For this reason, it is possible to adjust the contact pressure between the first and second electrodes 14A and 24A of the pressure sensitive switch 40A by the cushion member 51. As a result, it is possible to adjust the sensitivity of the pressure sensitive switch 40A.

Further, the slit 36A (FIG. 2), which allow the opening to communicate with the outside, is formed at the opening 34A of the spacer 30 that is interposed between the first and second electrodes 14A and 24A.

For this reason, when the second insulating sheet 21 is bent, air present in the opening 34A is discharged to the outside through the slit 36A without remaining in the opening. That is, the suppression of the bending of the first and second insulating sheets 11 and 21, which is caused by the air present in the opening 34, is avoided. Accordingly, the first and second electrodes 14A and 24A easily come into contact with each other as compared to a case in which the slit 36A is not formed. As a result, it is possible to improve the sensitivity of the pressure sensitive switch 40A.

The above description of the ON operation of the pressure sensitive switch 40A is the same as that of the other pressure sensitive switch 40B.

In the case of this embodiment, the pressure sensitive switches 40A and 40B are connected to each other in series. Accordingly, when these pressure sensitive switches 40A and 40B are turned on, electricity is conducted between the pair of terminals 42A and 42B (FIG. 4) and seating is detected by the conduction of electricity.

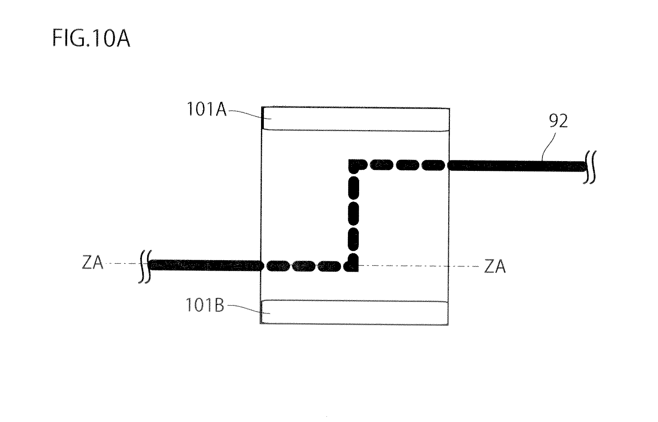

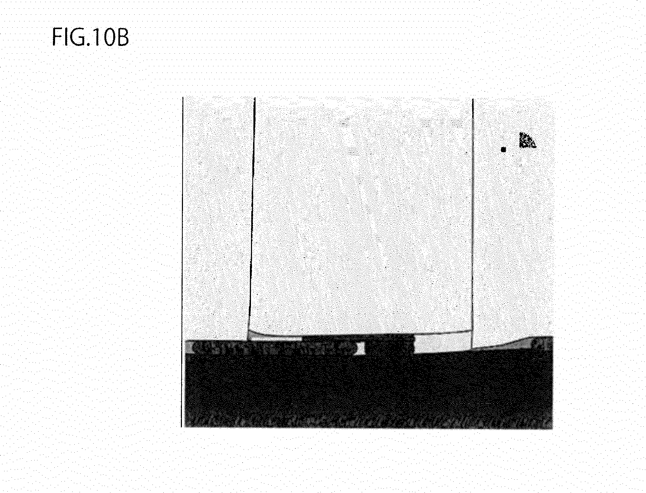

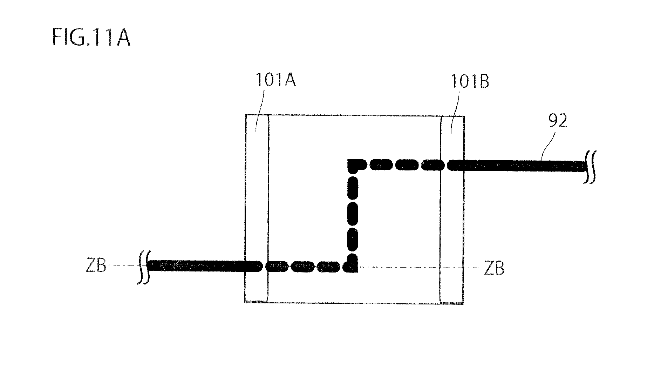

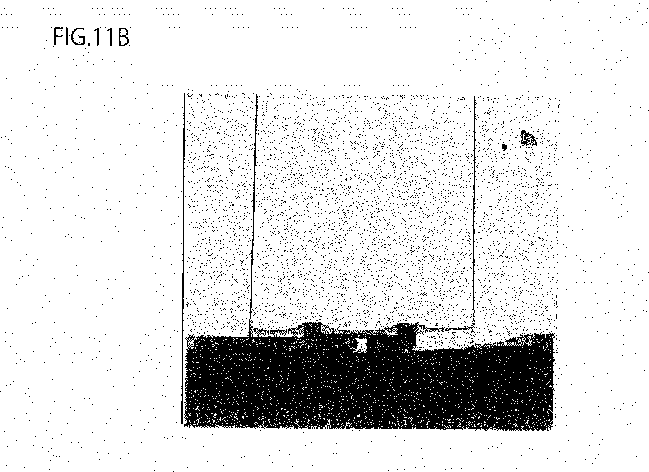

FIG. 10 is a diagram illustrating the result of a simulation of a state in which the lower surface of the cushion pad is bent when the pair of frame members 101A and 101B are disposed along the front-and-rear direction of the cushion pad 93. Further, FIG. 11 is a diagram illustrating the result of a simulation of a state in which the lower surface of the cushion pad is bent when the pair of frame members 101A and 101B are disposed along the left-and-right direction of the cushion pad 93.

Specifically, FIG. 10A is a diagram illustrating a state in which the pair of frame members 101A and 101B are disposed along the front-and-rear direction of the cushion pad 93, and FIG. 10B is a diagram illustrating the result of a simulation of a state in which the lower surface of the cushion pad is bent in the cross-section taken along line ZA-ZA of FIG. 10A. Furthermore, FIG. 11A is a diagram illustrating a state in which the pair of frame members 101A and 101B are disposed along the left-and-right direction of the cushion pad 93, and FIG. 11B is a diagram illustrating the result of a simulation of a state in which the lower surface of the cushion pad is bent in the cross-section taken along line ZB-ZB of FIG. 11A.

Meanwhile, the left sides in FIGS. 10 and 11 correspond to the rear side of the cushion pad 93, and the right sides in FIGS. 10 and 11 correspond to the front side of the cushion pad 93. Moreover, a substantially quadrangular portion, which is present from the middle to the upper side in FIGS. 10B and 11B, is the cushion pad 93, and the pad recesses 94 formed on the lower surface of the cushion pad 93 are omitted in this simulation.

It is found that the lower surface of the cushion pad, on which a person has been seated, is bent obliquely from the rear frame member 101B toward the front frame member 101A as illustrated in FIG. 10B when the pair of frame members 101A and 101B are disposed along the front-and-rear direction of the cushion pad 93.

The reason for this is that difference in the distribution of pressure where pressure applied to the rear side is higher than pressure applied to the front side is generated on the lower surface of the cushion pad. The reason why this difference in the distribution of pressure is generated is that the gravity of the hip of a person to be seated acts not only in the vertical direction but also in the forward direction. Meanwhile, the reason why the gravity of a hip acts in the forward direction is that forces applied from legs extending forward from the hip acts or a force of a backrest pushing the back acts when the seat device is provided with the backrest.

In contrast, it is found that the lower surface of the cushion pad, on which a person has been seated, is substantially uniformly bent between the rear frame member 101B and the front frame member 101A as illustrated in FIG. 11B when the pair of frame members 101A and 101B are disposed along the left-and-right direction of the cushion pad 93.

The reason for this is that the difference in the distribution of pressure, which is applied in the front-and-rear direction of the lower surface of the cushion pad, is reduced by the frame member 101B positioned at the rear of the seat device when the pair of frame members 101A and 101B are disposed along the left-and-right direction of the cushion pad 93.

It is found that pressure applied to the pressure sensitive switch 40A from the lower surface of the cushion pad can be easily and uniformly added in the vertical direction when the pair of frame members 101A and 101B are disposed along the left-and-right direction of the cushion pad 93 as described above.

Accordingly, it is possible to easily control the contact pressure between the pressure sensitive switch and the lower surface of the cushion pad as compared to a case in which the frame member are disposed along the front-and-rear direction of the cushion pad. Further, it is also possible to improve the durability of the pressure sensitive switch 40A.

As described above, the seating sensor 1 of this embodiment includes the pedestal 6 on which the pressure sensitive switch 40A or 40B is disposed, and the pedestal 6 includes the non-linear spring groove 7 to which the bent portion of one support spring can be fitted.

Accordingly, when the spring groove 7 is fitted to one bent portion of the support spring 92 so that the pedestal 6 is fixed to the support spring 92, the pressure sensitive switch 40A or 40B disposed on the pedestal 6 is interposed between the plurality of support springs 92 and the cushion pad 93 that is disposed on these support springs 92. Therefore, according to the seating sensor 1, it is possible to prevent discomfort that is caused by the pressure sensitive switch 40A or 40B.

Further, the spring groove 7 is formed in a non-linear shape so that one bent portion of one support spring can be fitted to the spring groove. For this reason, when the spring groove 7 is fitted to one bent portion of the support spring 92, the pedestal 6 can be fixed to the support spring 92 so as to cross the bent portion.

Accordingly, it is possible to suppress the shift of the pedestal 6 in the longitudinal direction of the support spring 92. Further, the inclination of the pressure sensitive switch 40A or 40B, which is fixed to the pedestal 6, with respect to the support spring 92 formed of a wire rod is reduced, so that it is possible to suppress the degradation of the sensitivity of the pressure sensitive switch. In addition to this, not only a pressing force that is applied from the cushion pad 93 but also a biasing force of the support spring 92 that resists the pressing force acts on the pressure sensitive switch 40A or 40B, so that the sensitivity of the pressure sensitive switch 40A or 40B per unit pressing force becomes good. According to the seating sensor 1, it is possible to appropriately detect seating in this way.

Incidentally, if the spring groove 7 is formed in a non-linear shape so that bent portions of two or more support springs 92 can be fitted to the spring groove, the pedestal 6 is disposed so as to cross the two or more support springs 92 when the spring groove 7 is fitted to the bent portions so that the pedestal 6 is fixed to the support springs 92. However, in this case, the two or more spring portions on which the pedestal 6 is disposed are restrained by the pedestal 6. Accordingly, even though a load is applied to the support springs 92 from the cushion pad 93, the free deformation of the spring portions within a predetermined range deteriorates. As a result, since an excessive load is applied to other spring portions, there is a concern that the durability of the support springs 92 deteriorates. Further, since the pedestal 6 restrains the support springs 92 to be deformed, an excessive load is also applied to the pedestal 6. For this reason, there is also a concern that the durability of the pedestal 6 deteriorates.

In this regard, in the case of this embodiment, the spring groove 7 is formed in a non-linear shape so that a bent portion of one support spring 92 can be fitted to the spring groove. Accordingly, it is possible to improve the durability of the support springs 92 and the pedestal 6 as compared to a case in which the spring groove 7 is formed in a non-linear shape so that bent portions of two or more support springs can be fitted to the spring groove.

Furthermore, if the spring groove 7 is formed in a non-linear shape so that two or more bent portions of one support spring 92 can be fitted to the spring groove, the pedestal 6 is disposed so as to cross the two or more bent portions when the spring groove 7 is fitted to the two or more bent portions so that the pedestal 6 is fixed to the support spring 92. However, in this case, the area of the support spring 92 occupied by the pedestal 6 is relatively large and the two or more bent portions on which the pedestal 6 is disposed are restrained by the pedestal 6, so that the free deformation of the support spring within a predetermined range deteriorates. Accordingly, there is a concern that the durability of the support spring 92 and the pedestal 6 deteriorates as in the above-mentioned case.

In this regard, in the case of this embodiment, the spring groove 7 is formed in a non-linear shape so that one bent portion of one support spring 92 can be fitted to the spring groove. Accordingly, it is possible to improve the durability of the support springs 92 and the pedestal 6 as compared to a case in which the spring groove 7 is formed in a non-linear shape so that two or more bent portions can be fitted to the spring groove.

Further, in the case of this embodiment, the pair of frame members 101A and 101B are provided on the portions of the pedestal 6 that face each other with the pressure sensitive switch 40A interposed therebetween, and the upper ends of the frame members 101A and 101B are positioned above the upper surface of the pressure sensitive switch 40A.

Accordingly, the pair of frame members 101A and 101B can support the cushion pad 93 by using the support springs 92 as a support base while forming the gap GP between the cushion pad 93 and the pressure sensitive switch 40A.

For this reason, it is possible to suppress false detection that is caused by the turning-on of the pressure sensitive switch 40A in a state in which pressure is not applied to the cushion pad, a case in which a burden lighter than a person is placed on the cushion pad, and the like. Further, it is also possible to control the contact pressure between the pressure sensitive switch 40A and the lower surface of the cushion pad by adjusting the gap GP between the cushion pad 93 and the pressure sensitive switch 40A, which is obtained when pressure is not applied to the cushion pad 93, by the heights of the frame members 101A and 101B.

Meanwhile, when frame members are provided so as to surround the whole circumference of the pressure sensitive switch 40A, the pressure sensitive switch 40A is surrounded by the frame members and the pedestal 6. For this reason, when the wires 16A to 16C and 26A connected to the pressure sensitive switch 40A are to be led to the outside of the frame members, it is necessary to make the wires pass through the gap between the upper ends of the frame members and the lower surface of the cushion pad 93 or pass through the frame members. However, when the wires 16A to 16C and 26A are led through the gap between the upper ends of the frame members and the lower surface of the cushion pad 93, there is a possibility that the durability of the wires 16A to 16C and 26A deteriorates. Meanwhile, when the wires 16A to 16C and 26A are led through the frame members, there is a possibility that the strength of the frame member itself is reduced, the wires 16A to 16C and 26A are complicated, or the like.

In this regard, in this embodiment that includes the pair of frame members 101A and 101B facing each other with the pressure sensitive switch 40A interposed therebetween, areas except for the pair of frame members 101A and 101B, which face each other, form empty spaces on the sides of the pressure sensitive switch 40A. Accordingly, it is possible to lead the wires 16A to 16C and 26A to the outside of the frame members 101A and 101B through the empty spaces without the above-mentioned possibility.

Furthermore, in the case of this embodiment, the pair of frame members 101A and 101B are disposed along the left-and-right direction of the cushion pad 93.

For this reason, as illustrated in FIGS. 10 and 11, pressure can be easily and uniformly added in the vertical direction as compared to a case in which the pair of frame members 101A and 101B are disposed along the front-and-rear direction of the cushion pad 93. As a result, it is possible to easily control the contact pressure between the pressure sensitive switch 40A and the lower surface of the cushion pad.

Further, in the case of this embodiment, the pad recesses 94 are formed on the lower surface of the cushion pad 93 above the frame members 101A and 101B and the pressure sensitive switch 40A and the frame members 101A and 101B are received in the pad recesses 94.

For this reason, it is possible to prevent a cushion portion, which is positioned above the pressure sensitive switch 40A, from being bent so as to enter the inside of the pair of frame members 101A and 101B when pressure is not applied to the cushion pad 93. Accordingly, it is possible to further suppress false detection as compared to a case in which the pair of frame members 101A and 101B are not received in the pad recess 94 that is formed above the pressure sensitive switch 40A. Furthermore, it is possible to reduce the self-weight of the cushion pad 93 that is applied to the pair of frame members 101A and 101B supporting the cushion pad 93, as compared to a case in which the pair of frame members 101A and 101B are not received in the pad recess 94 that is formed above the pressure sensitive switch 40A. Accordingly, it is also possible to improve the durability of the seating sensor 1.

Moreover, in the case of this embodiment, the pressure sensitive switch 40A that is disposed on the left side of the vertical plane VF passing through the center of the cushion pad 93 in the width direction and the pressure sensitive switch 40B that is disposed on the right side of the vertical plane VF are electrically connected to each other in series.

Pressure, which is applied to the lower surface of the cushion pad, tends to be dispersed in the left-and-right direction due to the shape of a hip when a person is seated on the cushion pad, but tends not to be dispersed in the left-and-right direction when small objects are placed on the cushion pad. Accordingly, when the pressure sensitive switches 40A and 40B, which are disposed at the left and right portions of the cushion pad, are connected to each other in series, seating is not detected if both the left and right pressure sensitive switches 40A and 40B are not turned on. Therefore, it is possible to more appropriately detect seating as compared to a case in which the pressure sensitive switches 40A and 40B are not connected to each other in series.

Further, since the pressure sensitive switches 40A and 40B are disposed above the support springs 92 in the vertical direction in the case of this embodiment, a large pressing force can be applied to the cushion pad 93 as compared to a case in which the pressure sensitive switches 40A and 40B are disposed at positions avoiding the positions present above the support springs 92 in the vertical direction. Accordingly, it is possible to further improve the sensitivity of the pressure sensitive switches 40A and 40B as compared to a case in which the pressure sensitive switches 40A and 40B are disposed at positions avoiding the positions present above the support springs 92 in the vertical direction.

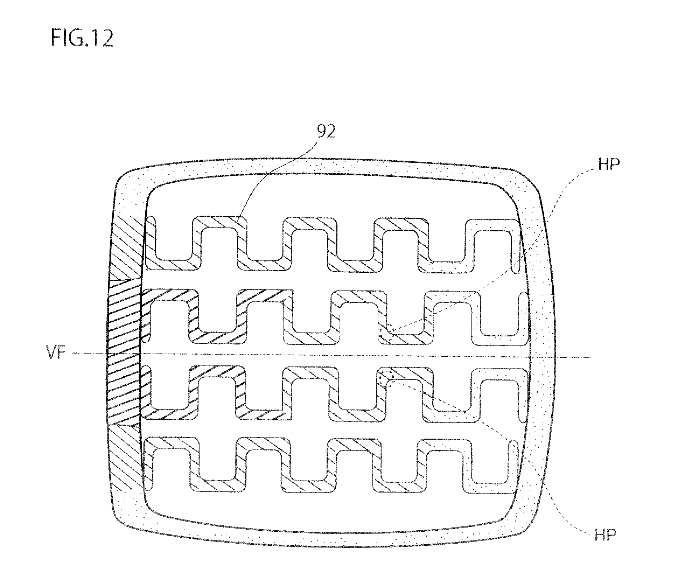

FIG. 12 is a conceptual diagram illustrating the distribution of a load that is applied to the seat frame 91 and the support springs 92 through the cushion pad 93 when a person is normally seated in the seat device 9. Specifically, in FIG. 12, a load applied near the hip points HP is represented by left diagonal lines and a load applied to the front of the hip points HP is represented by right diagonal lines. Furthermore, thick diagonal lines represent a large load. Meanwhile, spring portions and a seat frame portion, which are not represented by right diagonal lines or left diagonal lines, do not mean portions to which a load is not applied, and receive a load smaller than the load applied to the portions represented by right diagonal lines or left diagonal lines.

As illustrated in FIG. 12, the load which is applied to the spring portion and the seat frame portion (the right diagonal line portion) at the front side of the hip point HP increases compared to the spring portion (the left diagonal line portion) near the hip point HP. The reason for this is considered as follows.

When a person is normally seated in the seat device 9 provided with the backrest 96, the gravity of legs extending forward from the hip is mainly applied to the front portion of the cushion pad 93. Further, the back of the person comes into contact with the backrest 96 and the back is pushed by the backrest 96, so that a force applied to the back pushes the hip of the person forward. Accordingly, the hip of the sitting person presses the cushion pad 93 in the vertical direction by the gravity, and presses the cushion pad 93 forward by the force from the back. That is, a force, which pushes the cushion pad 93, of the person whose hip is seated acts not only in the vertical direction by the gravity but also in the forward direction by a force of the backrest 96 pushing the back. In this way, a pressing force, which is applied to the support springs 92 from the cushion pad 93, becomes large in front of the hip points HP of the person who is normally seated, as compared to other portions.

Furthermore, since the pelvis of a person is spread in the left-and-right direction compared to in the front-and-rear direction, the pressing force, which is applied to the support spring 92 from the cushion pad 93 according to seating, is widely dispersed in the width direction compared to in the front-and-rear direction of the cushion pad 93. Accordingly, when a person is normally seated, a pressing force applied to the support spring 92 is also dispersed in the width direction so as to be substantially symmetrical with respect to the vertical plane VF.

Since the pressure sensitive switches 40A and 40B are disposed in front of the hip points HP as described above, pressing forces larger than the pressing forces applied to the hip points HP are applied to the pressure sensitive switches 40A and 40B. Accordingly, the respective pressure sensitive switches 40A and 40B can appropriately detect pressing forces that are caused by the seating of a person when the person is normally seated.

Next, a material forming the seating sensor 1 will be described.

The pedestals 6, the convex portions 8x and 8y, the insulating sheets 11 and 21, the spacer 30, and the pair of frame members 101A and 101B are made of an insulating resin having flexibility. Polyethylene, polyethylene terephthalate (PET), polyethylene naphthalate (PEN), polyimide (PI), and ABS may be exemplified as this resin. Among these, PEN is preferred from the viewpoint of excellent heat resistance. Meanwhile, the pedestals 6 and the pair of frame members 101A and 101B may be made of metal.

Further, it is preferable that an acrylic adhesive be used as an adhesive applied to both surfaces of the spacer 30 and an adhesive applied to the cushion member 51 of the sensor section 5 and the pedestals 6, and examples of the adhesives include an adhesive that uses an acrylic polymer, which uses one or two or more kinds of alkyl (meth)acrylate as a monomeric component, as a base. Meanwhile, the pedestal 6 and the pair of frame members 101A and 101B may be fixed to each other by the above-mentioned adhesive, and may be integrally formed.

Furthermore, the first electrodes 14A and 14B, the second electrodes 24A and 24B, the first wires 16A to 16C, the second wire 26A, and the terminals 42A and 42B are made of conductive paste, metal foil formed by plating, or the like. A part of these components may be formed of the conductive paste, and the other portions may be formed of the metal foil formed by plating. As the conductive paste, various metal pastes such as a silver paste or a carbon paste may be exemplified. Moreover, copper, nickel, a laminated body thereof, or the like may be exemplified as the metal foil formed by plating.

Particularly, it is preferable that at least one of the first electrodes 14A and 14B and the second electrodes 24A and 24B be made of a material of which a resistance value increases with a temperature rise. Generally, a resin having flexibility, such as the first and second insulating sheets 11 and 21, is easily bent with a temperature rise. Accordingly, when the temperature of an environment in which the seat device 9 is present rises, the first electrodes 14A and 14B easily come into contact with the second electrodes 24A and 24B. In this case, if at least one of the first electrodes 14A and 14B and the second electrodes 24A and 24B is an electrode of which a resistance value increases with a temperature rise as described above, the first and second insulating sheets 11 and 21 are easily bent with a temperature rise. Accordingly, the first electrodes 14A and 14B easily come into contact with the second electrodes 24A and 24B, but current does not easily flow in the electrodes coming into contact with each other. Therefore, the easiness of contact between the electrodes and the difficulty of flow of current flowing in the electrodes are offset from each other, so that the change of a pressing force turning on the pressure sensitive switches 40A and 40B can be suppressed even when the environmental temperature of the seat device 9 changes. In particular, when the seat device 9 is mounted on an automobile, temperature in the automobile significantly changes. Further, since the support spring 92 is generally made of metal, heat is easily transferred to the seating sensor 1. Accordingly, if at least one of the first electrodes 14A and 14B and the second electrodes 24A and 24B is made of a material of which a resistance value increases with a temperature rise as described above, it is possible to appropriately sense the seating of a person even when temperature changes in the automobile. Therefore, this seat device 9 is particularly useful for an automobile. A two-layer electrode where carbon paste is applied on silver paste may be exemplified as this electrode.

Further, the cushion member 51 is a member that has an elastic force and is deformed so as to be crushed as described above. A material forming the this member is not particularly limited, but a sponge-like resin including a plurality of vacancies, a nonwoven fabric in which fibers made of a resin having an elastic force are entangled, rubber, or the like may be exemplified as a material of the cushion member 51. A resin containing at least one of silicon and polyester may be exemplified as this resin, and the change of the elastic force of this resin, which is caused by a temperature change, is small. Accordingly, since it is possible to suppress the change of a load for the detection of seating even when the seating sensor 1 is disposed at a place such as an automobile in which the environmental temperature significantly changes, it is preferable that this resin be used.

### (Second embodiment)

Next, a preferred second embodiment of the invention will be described in detail with reference to the drawings. Furthermore, the same reference numerals will be given to the same or equivalent components to those of the first embodiment, and the description thereof will not be repeated, unless otherwise particularly described.

### <As for the seating sensor>

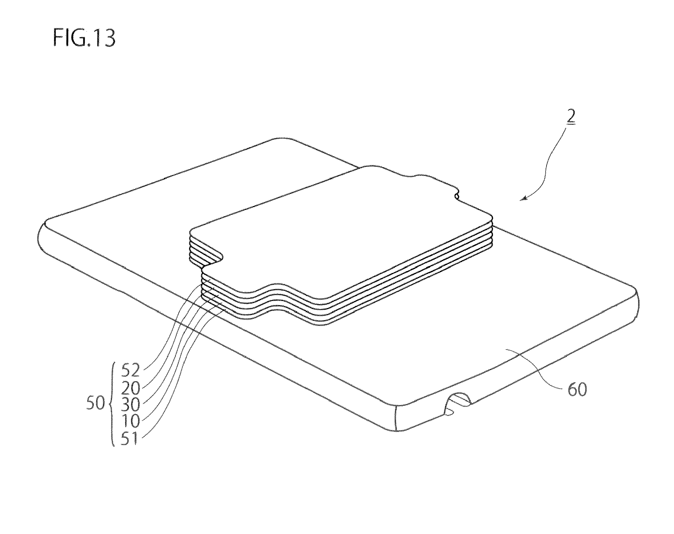

FIG. 13 is a perspective view illustrating a seating sensor 2 of a second embodiment. As illustrated in FIG. 13, the seating sensor 2 of this embodiment is different from the seating sensor 1 of the first embodiment in that the pair of frame members 101A and 101B are omitted.

Further, the seating sensor 2 of this embodiment includes a sensor section 50 instead of the sensor section 5 of the first embodiment, and includes a pedestal 60 instead of the pedestals 6 of the first embodiment.

### <As for the sensor section>

The sensor section 50 of this embodiment includes the first electrode sheet 10, the second electrode sheet 20, the spacer 30 interposed between the first electrode sheet 10 and the second electrode sheet 20, and cushion members 51 and 52 each disposed on one surface of the first electrode sheet 10 and the second electrode sheet 20, as main components.

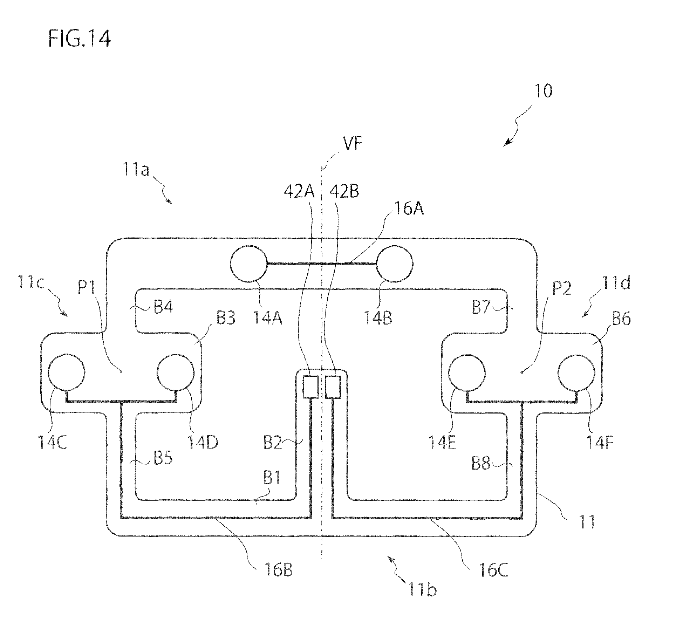

FIG. 14 is a plan view illustrating the first electrode sheet 10 of the second embodiment. As illustrated in FIG. 14, the first electrode sheet 10 includes a film-like first insulating sheet 11 having flexibility, first electrodes 14A to 14F that are provided on the surface of the first insulating sheet 11, and terminals 42A and 42B that are provided on the surface of the first insulating sheet 11, as main components.

The first insulating sheet 11 includes a front portion 11a that corresponds to the forward direction of a seat device, a rear portion 11b that corresponds to the rearward direction of the seat device, a left portion 11c that corresponds to the leftward direction of the seat device, and a right portion 11d that corresponds to the rightward direction of the seat device.

The front portion 11a is formed of a strip-shaped block that extends leftward and rightward from a position corresponding to the forward direction of the seat device by the same length and is perpendicular to a vertical plane VF thereof. The rear portion 11b includes: a strip-shaped base block B1 that extends leftward and rightward from a position, which is present on the vertical plane VF and corresponds to the rearward direction of the seat device, by the same length and is perpendicular to the vertical plane VF; and a strip-shaped tail block B2 that extends from the center of the base block B1 to the vicinity of the front portion 11a. The left portion 11c includes a left island block B3 that has a center on a left point P1 of left and right points P1 and P2 of which a bisector plane is the vertical plane VF and has a substantially rectangular shape, a strip-shaped connection block B4 that connects the left island block B3 to the left end of the front portion 11a, and a strip-shaped connection block B5 that connects the left island block B3 to the left end of the base block B1 of the rear portion 11b. The right portion 11d includes a right island block B6 that has a center on the right point P2 of the left and right points P1 and P2 of which the bisector plane is the vertical plane VF and has a substantially rectangular shape, a strip-shaped connection block B7 that connects the right island block B6 to the right end of the front portion 11a, and a strip-shaped connection block B8 that connects the right island block B6 to the right end of the base block B1 of the rear portion 11b.

As described above, the first insulating sheet 11 (the respective portions 11a to 11d) is formed symmetrically with respect to the vertical plane VF. Meanwhile, a fact that the first insulating sheet 11 is formed symmetrically is not a prerequisite. However, in terms of manufacturing efficiency, stability, and the like, it is preferable that the insulating sheet be formed symmetrically. Further, a fact that the first insulating sheet 11 has flexibility is not a prerequisite. However, in terms of softness, stability, and the like, it is preferable that the insulating sheet have flexibility.

The first electrodes 14A and 14B are symmetrical with respect to a line that is a portion of one surface of the front portion 11a crossing the vertical plane VF, and are provided at positions, which are present on a line parallel to a direction perpendicular to the vertical plane VF, respectively. The first electrodes 14C and 14D and the first electrodes 14E and 14F make pairs to be connected in parallel. The first electrodes 14C and 14D are symmetrical with respect to the left point P1 on one surface of the left portion 11c, and are provided at positions, which are present on a line parallel to a direction perpendicular to the vertical plane VF, respectively. The first electrodes 14E and 14F are symmetrical with respect to the right point P2 on one surface of the right portion 11d, and are provided at positions, which are present on a line parallel to a direction perpendicular to the vertical plane VF, respectively. Furthermore, the first electrodes 14C and 14D, which make one pair, and the first electrodes 14E and 14F, which make the other pair, are arranged on the same line. Meanwhile, the second electrode sheet 20 faces the surface on which the first electrodes 14A to 14F are provided.

The first electrodes 14A and 14B are electrically connected to each other by a first wire 16A, and the first wire 16A is disposed on the surface of the base block B1. The first electrodes 14C and 14D and the terminal 42A are electrically connected to each other by a first wire 16B, and the first wire 16B is disposed along the surfaces of the tail block B2, the base block B1, the connection block B5, and the left island block B3. Further, the first electrodes 14E and 14F and the terminal 42B are electrically connected to each other by a first wire 16C, and the first wire 16C is disposed along the surfaces of the tail block B2, the base block B1, the connection block B8, and the right island block B6. Meanwhile, these first wires 16A to 16C have been disposed on the same surface, but may be disposed on different surfaces.

As described above, in the first electrode sheet 10, the first electrodes 14A and 14B are electrically connected to each other, the first electrodes 14C and 14D are connected to the terminal 42A in parallel, and the first electrodes 14E and 14F are connected to the terminal 42B in parallel.

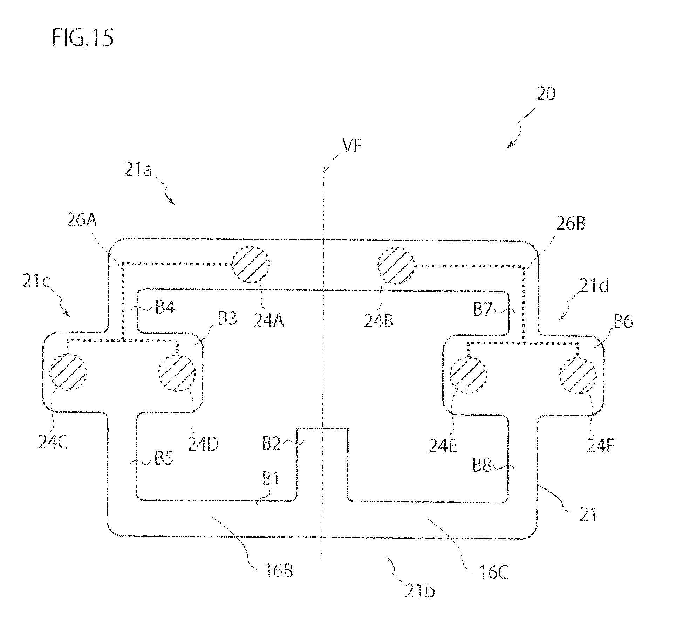

FIG. 15 is a plan view illustrating the second electrode sheet of the second embodiment. As illustrated in FIG. 15, the second electrode sheet 20 mainly includes a second insulating sheet 21 which has flexibility and a film-like property and second electrodes 24A to 24F which are formed on the surface of the second insulating sheet 21. Meanwhile, the flexibility of the second insulating sheet 21 and the flexibility of the first insulating sheet 11 are substantially the same, but may be different from each other.

The second insulating sheet 21 includes a front portion 21a, a rear portion 21b, a left portion 21c, and a right portion 21d that have the same shape and size as the front portion 11a, the rear portion 11b, the left portion 11c, and the right portion 11d of the first insulating sheet 11. Meanwhile, the shape or size of the second insulating sheet 21 may be different from that of the first insulating sheet 11.

The second electrodes 24A to 24F have the same shape and size as the first electrodes 14A to 14F. Furthermore, the second electrodes 24A to 24F are respectively provided at positions where the second electrodes 24A to 24F completely overlap the first electrodes 14A to 14F at the surface of the first electrode sheet 10 of the second insulating sheet 21 when the second electrode sheet 20 overlaps the first electrode sheet 10.

The second electrode 24A and the second electrodes 24C and 24D, which make a pair to be connected in parallel, are electrically connected to each other by a second wire 26A, and the second wire 26A is disposed along the surfaces of the front portion 21a, the connection block B4, and the left island block B3. Further, the second electrode 24B and the second electrodes 24E and 24F, which make a pair to be connected in parallel, are electrically connected to each other by a second wire 26B, and the second wire 26B is disposed along the surfaces of the front portion 21a, the connection block B7, and the right island block B6. Meanwhile, these second wires 26A and 26B have been disposed on the same surface, but may be disposed on different surfaces.

As described above, in the second electrode sheet 20, the second electrodes 24C and 24D are connected to the second electrode 24A in parallel and the second electrodes 24E and 24F are connected to the second electrode 24B in parallel.

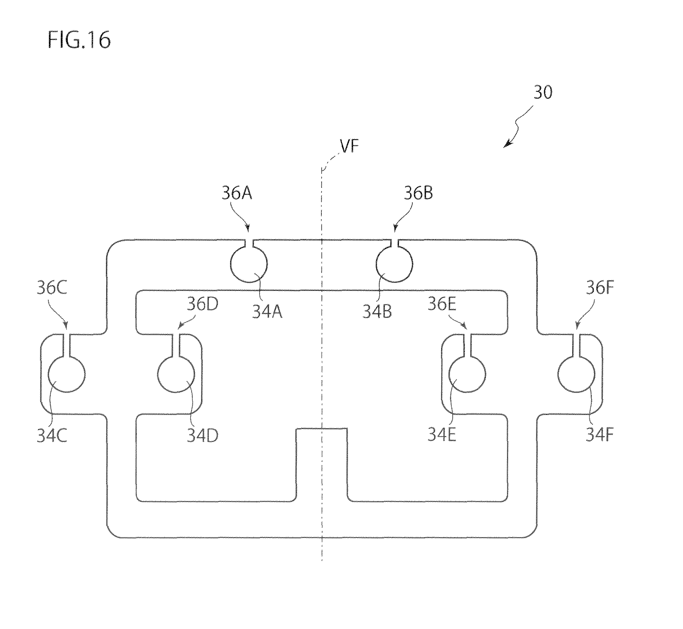

FIG. 16 is a plan view illustrating the spacer of the second embodiment. The spacer 30 is formed of an insulating sheet having flexibility. Further, as illustrated in FIG. 16, the contour of the spacer 30 corresponds to the contour of the first or second electrode sheet 10 or 20.

Furthermore, openings 34A to 34F having the same size are formed in the spacer 30. The openings 34A to 34F have peripheral edges having a substantially circular shape, and are formed so as to have a diameter slightly smaller than the diameter of each of the first electrodes 14A to 14F. Further, the openings 34A to 34F are formed at positions where the openings 34A to 34F are received inside the outer peripheries of the first electrodes 14A to 14F, respectively, when the spacer 30 is superimposed on the first electrode sheet 10 and the openings 34A to 34F are viewed from a direction perpendicular to the spacer 30.

Moreover, slits 36A to 36F, which are air vent slits and spatially connect the openings 34A to 34F to the outside of the spacer 30, are formed in the spacer 30. Specifically, one ends of the respective slits 36A to 36F are connected to the outside of the spacer 30. Further, the other ends of the slits 36A to 36F are connected to the corresponding openings 34A to 34F.

Meanwhile, an adhesive (not illustrated), which adheres to the first and second electrode sheets 10 and 20, is applied on both surfaces of the spacer 30.

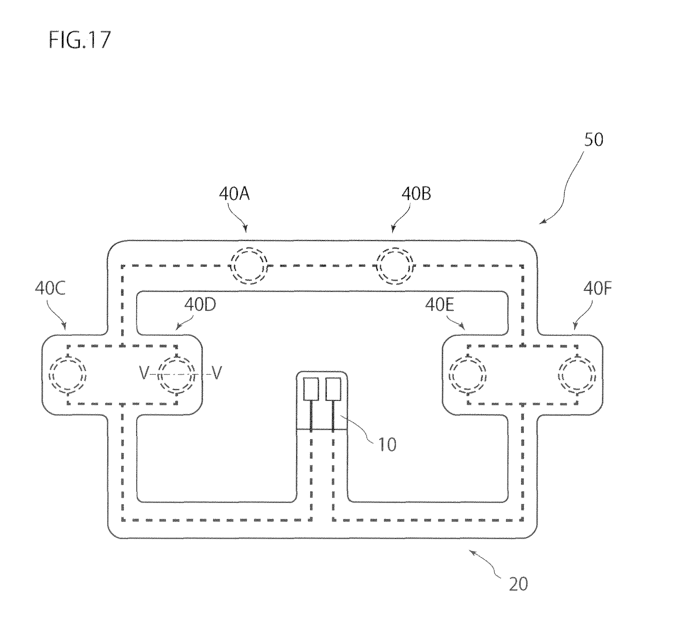

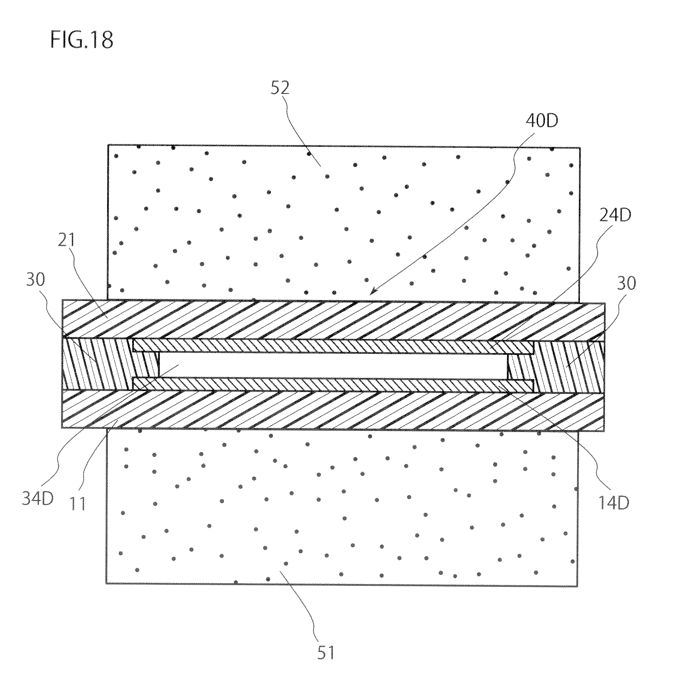

FIG. 17 is a diagram illustrating a state in which the first electrode sheet 10, the spacer 30, and the second electrode sheet 20 are superimposed which is viewed from a vertical direction. However, the cushion members 51 and 52 are not illustrated for easy understanding. FIG. 18 is a diagram illustrating an aspect of the cross-section taken along line V-V of FIG. 17. As illustrated in FIGS. 17 and 18, the first and second electrode sheets 10 and 20 are superimposed with the spacer 30 interposed therebetween and are fixed to each other by the adhesive applied on both surfaces of the spacer 30, so that the sensor section 50 is integrated.

When the first electrode sheet 10, the spacer 30, and the second electrode sheet 20 are superimposed and integrated as described above, the first electrode 14D of the first electrode sheet 10 and the second electrode 24D of the second electrode sheet 20 overlap each other and the opening 34D formed in the spacer 30 is received inside the outer periphery of the second electrode 24D as illustrated in FIG. 18. Further, the first electrode 14D and the second electrode 24D face each other so as to be spaced apart from each other at a predetermined interval by the spacer 30 as illustrated in FIG. 18. In this way, there is formed a pressure sensitive switch 40D that includes the first and second insulating sheets 11 and 21, the sheet-like spacer 30 in which the opening 34D is formed, and the pair of electrodes 14D and 24D facing each other through the opening 34D.

Likewise, the other first electrodes 14A to 14C and 14E to 14F and the other second electrodes 24A to 24C and 24E to 24F face each other so as to be spaced apart from each other at a predetermined interval at the openings 34A to 34C and 34E to 34F of the spacer 30. Accordingly, pressure sensitive switches 40A to 40C and 40E to 40F are formed as illustrated in FIG. 17.

Further, as illustrated in FIG. 18, a cushion member 52, which has an elastic force and is deformed so as to be crushed when pressure is applied thereto, is provided on the surface, which is opposite to the surface of the second electrode sheet 20 facing the spacer 30, of the surfaces of the second electrode sheet 20. Furthermore, a cushion member 51 is provided on the surface, which is opposite to the surface of the first electrode sheet 10 facing the spacer 30, of the surfaces of the first electrode sheet 10.

Meanwhile, the pair of cushion members 51 and 52 may be provided on the entire one surfaces of the corresponding first and second electrode sheets 10 and 20, and may be provided on surface portions opposite to the portions, on which the pressure sensitive switches 40A to 40F are disposed, of one surfaces of the first and second electrode sheets 10 and 20. Moreover, the pair of cushion members 51 and 52 may be integrally provided so as to cover all or a part of the pressure sensitive switches 40A to 40F. The pair of cushion members 51 and 52 may be provided on a part of the surfaces opposite to the surfaces that faces the spacer 30. Meanwhile, for convenience, the cushion members 51 and 52 are not illustrated in FIG. 17.

In this embodiment, the sum of the thicknesses of the portions of the pair of cushion members 51 and 52 to be crushed is not smaller than a distance between the electrodes, which face each other, of each of pressure sensitive switches 40A to 40F. Further, the cushion members 51 and 52 have the same thickness, and the respective cushion members 51 and 52 are made of the same material and have the same elastic force. Accordingly, the cushion members 51 and 52 are adapted to be crushed to the same extent when the same pressure is applied to the cushion members 51 and 52. Therefore, even though any one of the first and second electrode sheets 10 and 20 is positioned on the upper side when the sensor section 50 is used, the same sensitivity for detecting seating can be obtained.

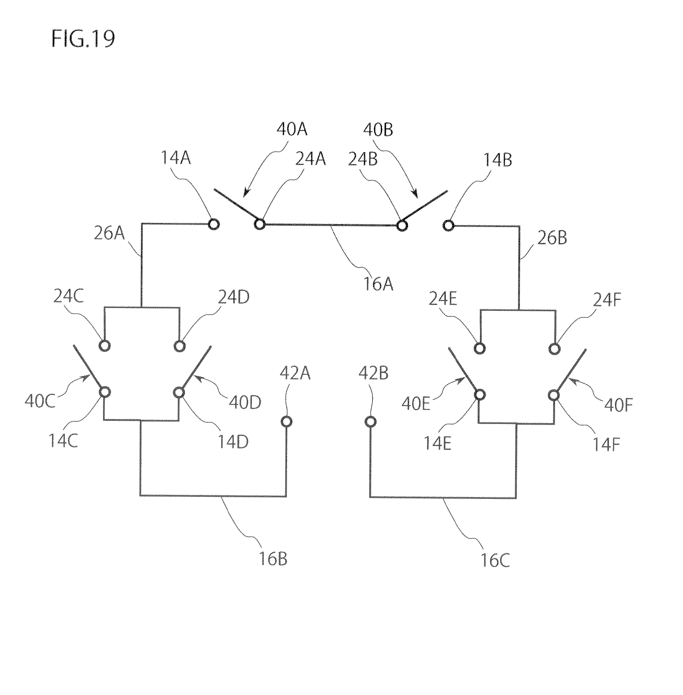

FIG. 19 is a circuit diagram illustrating the circuit configuration of the sensor section 50 of the second embodiment by an equivalent circuit. As illustrated in FIG. 19, the respective pressure sensitive switches 40A to 40F and the respective terminals 42A and 42B, which have been formed as described above, are connected to each other by the first wires 16A to 16C that are formed on the surface of the first insulating sheet 11 and the second wires 26A and 26B that are formed on the surface of the second insulating sheet 21. The respective pressure sensitive switches 40A to 40F are connected in this way, so that a circuit of the sensor section 50 is formed.

Further, the pressure sensitive switches 40C and 40D are connected to the terminal 42A and the pressure sensitive switch 40A in parallel, and the pressure sensitive switches 40E and 40F are connected to the terminal 42B and the pressure sensitive switch 40B in parallel. Furthermore, the terminal 42A, the pressure sensitive switch 40C or 40D, the pressure sensitive switch 40A, the pressure sensitive switch 40B, the pressure sensitive switch 40E or 40F, and the terminal 42B are connected in series. That is, two pairs of pressure sensitive switches 40C and 40D, and 40E and 40F of the pressure sensitive switches 40A to 40F, which are provided on the path between the terminals 42A and 42B, are connected in parallel. For this reason, when the pressing force of the cushion member 51 or 52 is transmitted to one of the pressure sensitive switch 40C or 40D and the pressure sensitive switch 40E or 40F, connection is maintained even though the pressing force is not transmitted to the other pressure sensitive switch.

### <As for the pedestal>

As illustrated in FIG. 13, the pedestal 60 of this embodiment has a size on which the entire sensor section 50 can be placed.

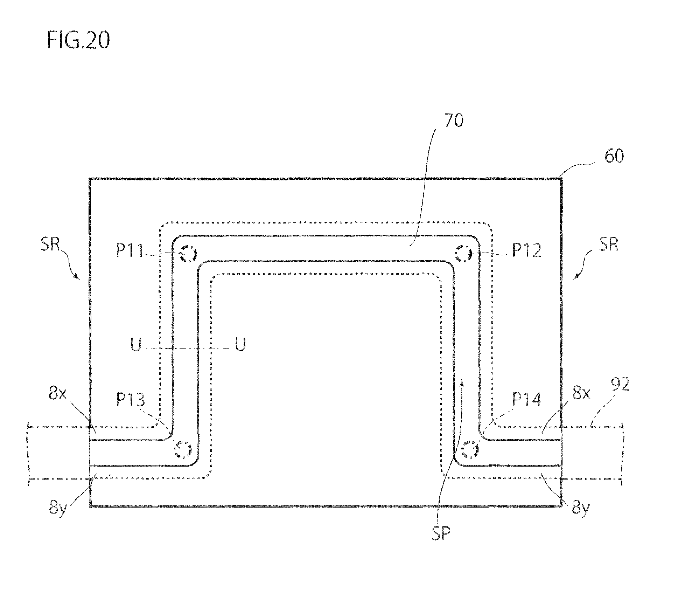

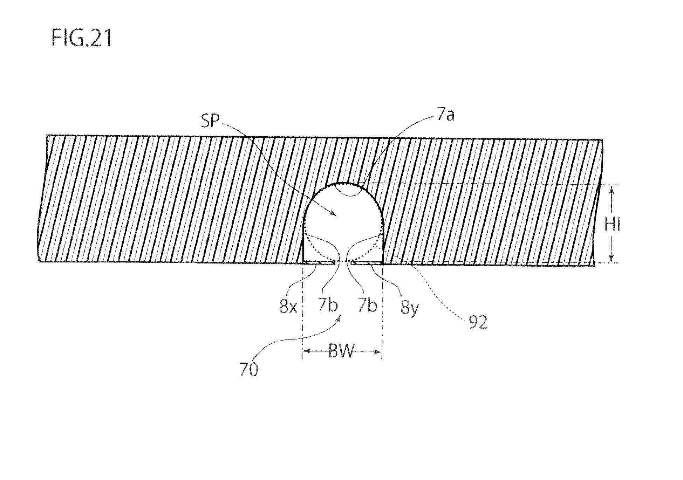

FIG. 20 is a plan view illustrating the pedestal that is viewed from one side. FIG. 21 is a diagram illustrating an aspect of the cross-section taken along line U-U of FIG. 20. As illustrated in FIG. 20, a cushion member (not illustrated) is provided on one of the wide surfaces of the pedestal 60 with an adhesive interposed therebetween and a spring groove 70 is formed on the other thereof.

The spring groove 70 is formed in a non-linear shape so that a plurality of bent portions of one support spring 92 can be fitted to the spring groove. In the case of this embodiment, the non-linear spring groove 70, which corresponds to the bent portions including a plurality of maximum points P11 to P14 of one support spring 92, is formed and both ends of the spring groove 70 are opened to side surfaces SR of the pedestal 60 that face each other.

Further, as illustrated in FIG. 21, a bottom portion 7a of the vertical cross-section of the spring groove 70 has the same shape as the semi-circular arc shape of the vertical cross-section of the spring that is a wire rod. Side portions 7b of the spring groove 70 are parallel to each other, and a distance BW between the side portions 7b (the width of the groove) is substantially the same as the diameter of the spring that is a wire rod.

In this way, the spring groove 70 is formed so as to have a non-linear space SP corresponding to the bent portions, which are to be fitted, of the spring that is a wire rod stretched out in the seat frame.

Furthermore, a pair of convex portions 8x and 8y, which protrude toward the opposite edges of the groove, are connected to the longitudinal edges of the spring groove 70, and a height HI between a position where the convex portions 8x and 8y protrude toward the spring groove 70 the most and the lowest position of the spring groove 70 is smaller than the diameter of the spring.

### <As for the seat device>

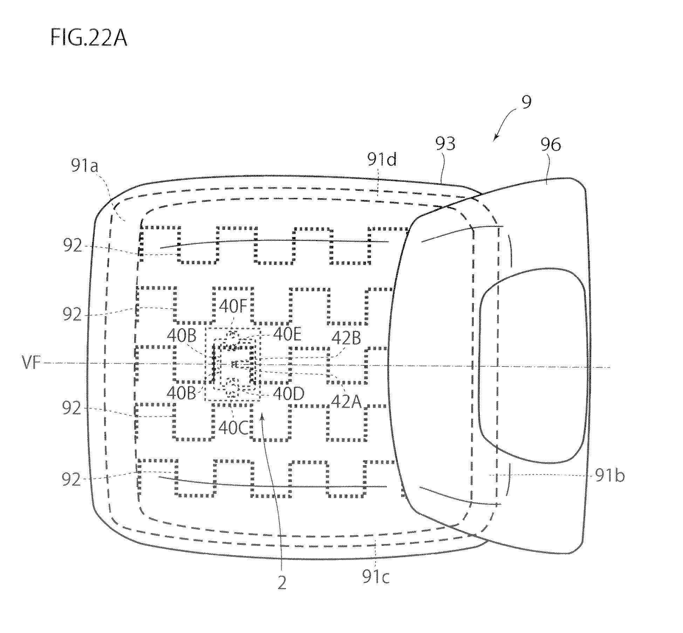

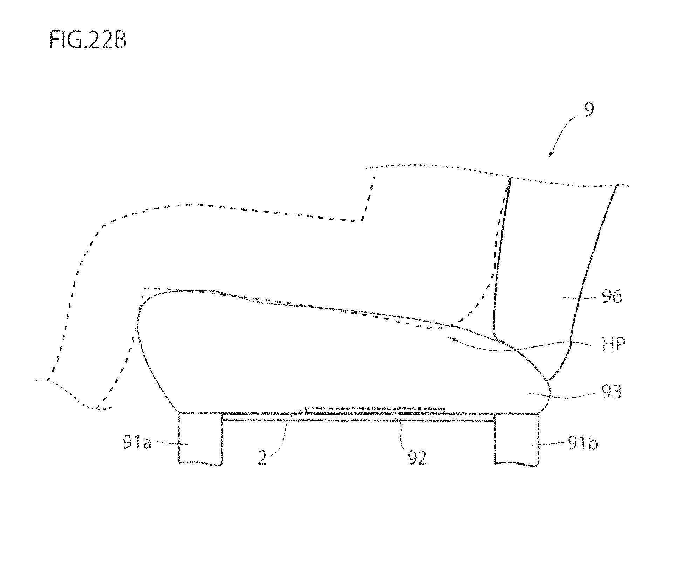

FIG. 22 is a diagram illustrating an aspect of a seat device of the second embodiment. Specifically, FIG. 22A illustrates an aspect, which is viewed from above, of the seat device 9 on which the seating sensor 2 is disposed and FIG. 22B illustrates an aspect, which is viewed from a lateral direction, of the seat device 9 on which the seating sensor 2 is disposed. As illustrated in FIG. 22, the seat device 9 includes a seat frame 91, a plurality of support springs 92, a cushion pad 93, a backrest 96, and the seating sensor 2, as main components. The seat device 9 is, for example, a vehicle seat device.

Meanwhile, the number of the support springs 92 illustrated in FIG. 22A and a method of disposing the support springs are different from those of the first embodiment, but may be the same as those of the first embodiment. Further, the pad recesses 94 formed on the lower surface of the cushion pad 93 are omitted in the case of this embodiment.

The seating sensor 2 is disposed on the support spring 92, and is interposed between the support spring 92 and the cushion pad 93. Specifically, the spring groove 70 of the pedestal 60 of the seating sensor 2 is fitted to the plurality of bent portions of one support spring 92. In this way, the pedestal 60 is disposed on the bent portions so as to cross the plurality of bent portions of one support spring 92.

As illustrated in FIG. 22, the pressure sensitive switches 40A and 40B of the sensor section 50 of the seating sensor 2 disposed on the support spring 92 are symmetrical to each other on the left and right sides of a vertical plane VF passing through the center of the cushion pad 93 in the width direction, and is disposed along the width direction of the cushion pad 93.

The two pairs of pressure sensitive switches 40C and 40D, and 40E and 40F, which are connected in parallel, are disposed along the width direction of the cushion pad 93 at positions that are symmetrical to each other on the left and right sides of the vertical plane VF. Further, one pressure sensitive switch 40E of the pair to be connected in parallel is disposed at a position above the support spring 92 in the vertical direction. In contract, the other pressure sensitive switch 40F of the pair, which is to be connected in parallel, and the pressure sensitive switches 40A to 40D are disposed at positions avoiding the positions that are present above the support spring 92 in the vertical direction.

Furthermore, all of the pressure sensitive switches 40A to 40F are disposed on the seat frame 91 in front of hip points HP of a person who is normally seated. The terminals 42A and 42B, which are connected to the pressure sensitive switches 40A to 40F, are electrically connected to an external power source and an external measurement section (not illustrated) from the lower side of the seat frame 91.

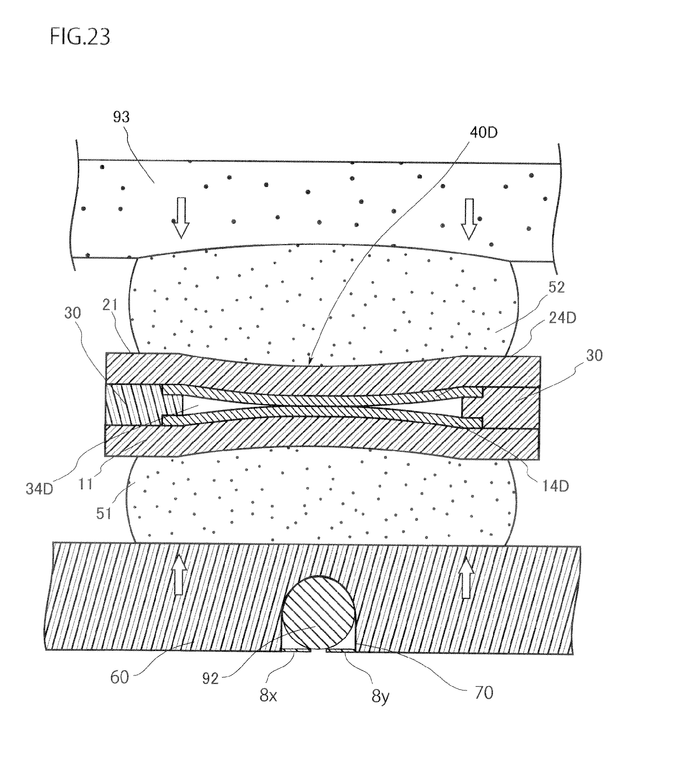

FIG. 23 is a diagram illustrating an aspect of, for example, the pressure sensitive switch 40D that is turned on in a state in which the support spring 92 is fitted to the spring groove 70 of the pedestal 60 and the seating sensor 2 is disposed on the support spring 92, with the same viewpoint as FIG. 18. Meanwhile, only a part of the pedestal 60 and the support spring 92 are illustrated in FIG. 23 for easy understanding.

When a person is seated, the pressure sensitive switch 40D disposed in front of the hip points HP is appropriately pressed in the direction perpendicular to the surfaces of the first and second electrodes 14D and 24D, which are components of the pressure sensitive switch 40D, by the support spring 92 and the cushion pad 93 as illustrated by arrows. That is, the cushion member 52 receives a pressing force from the cushion pad 93 of the seat, and the cushion member 51 receives a pressing force from the support spring 92. At this time, the cushion members 51 and 52 are deformed so as to be crushed by the pressing forces. Further, the first and second insulating sheets 11 and 21 receive pressing forces from the cushion members 51 and 52 due to the elastic forces of the cushion members 51 and 52, and are bent so as to enter the opening 34D of the spacer 30. For this reason, the electrodes 14D and 24D, which are provided on the insulating sheets 11 and 21 and face each other through the opening 34D of the spacer 30, come into contact with each other. In this way, the pressure sensitive switch 40D is turned on.

Furthermore, in the same manner as the pressure sensitive switch 40D, the pressure sensitive switch 40E, which is disposed at a position symmetrical to the pressure sensitive switch 40D with respect to the vertical plane VF, is also turned on when the first and second insulating sheets 11 and 21 are pressed by the elastic forces of the cushion members 51 and 52. Moreover, in the same manner as the pressure sensitive switches 40D and 40E, the pressure sensitive switches 40A, 40B, 40C, and 40F are also turned on when the first and second insulating sheets 11 and 21 are pressed by the elastic forces of the cushion members 51 and 52.

When at least one of the pressure sensitive switches 40C and 40D and 40E and 40F, which make pairs to be connected in parallel, is turned on and the pressure sensitive switches 40A and 40B are turned on, electricity is conducted between the terminals 42A and 42B. In this way, the measurement section (not illustrated) measures a signal sensed by the seating sensor 2, so that the seating of a person is detected.

Meanwhile, in the seating sensor 2 of this embodiment, as described above, the sum of the thicknesses of the portions of the cushion members 51 and 52 to be crushed is not smaller than a distance between the electrodes 14A to 14F and the electrodes 24A to 24F. Accordingly, since the pressure sensitive switches 40A to 40F can be turned on when the cushion members 51 and 52 are deformed so as to be only crushed without being bent, it is possible to appropriately detect seating.

Further, when the first and second insulating sheets 11 and 21 are bent, air present in the respective openings 34A to 34F is discharged to the outside through the slits 36A to 36F. Accordingly, when each of the pressure sensitive switches 40A to 40F is turned on, the first insulating sheet 11 and the second insulating sheet can be appropriately bent and the pair of electrodes of each of the pressure sensitive switches 40A to 40F easily come into contact with each other.

As described above, the seating sensor 2 of this embodiment includes the pedestal 60, the spring groove 70 is formed on the pedestal 60, and the spring groove 70 is formed in a non-linear shape so that the plurality of bent portions of one support spring 92 can be fitted to the spring groove.

For this reason, since a spring portion to be fitted can be intuitively perceived, it is possible to position the pedestal 60 on the spring portion. Further, when the pedestal 60 is positioned as described above, the pedestal 60 and the pressure sensitive switches 40A to 40F disposed on the seating surface side of the pedestal 60 are interposed between the plurality of support springs 92 and the cushion pad 93 disposed on these support springs 92. Accordingly, the cushion pad 93 is interposed between the seating surface of the cushion pad 93 and the pressure sensitive switches 40A to 40F. Since the pressure sensitive switches 40A to 40F are positioned on the spring portions by the pedestal 60 in the seating sensor 2 as described above, it is possible to prevent discomfort that is caused by the pressure sensitive switches.

Furthermore, when the pressure sensitive switches 40A to 40F are positioned on the spring portions, not only a pressing force applied from the cushion pad but also a biasing force of the support springs 92 resisting the pressing force acts on the pressure sensitive switches 40A to 40F. Accordingly, the sensitivity of the pressure sensitive switches 40A to 40F per unit pressing force is good. Therefore, since the pressure sensitive switches 40A to 40F are positioned on the spring portions by the pedestal 60 in the seating sensor 2, it is possible to appropriately detect seating.

In addition, since the spring groove 7 of the pedestal 60 is formed in a non-linear shape so that the plurality of bent portions of one support spring 92 can be fitted to the spring groove, the pedestal 60 can be disposed so as to cross the plurality of bent portions when the bent portions are fitted to the spring groove 70. Accordingly, it is possible to significantly suppress the shift of the pedestal 60 in the longitudinal direction of the support spring 92. Further, the inclination of the pressure sensitive switches 40A to 40F, which are disposed on the pedestal 60, with respect to the support spring 92 formed of a wire rod is reduced, so that it is possible to suppress the degradation of the sensitivity of the pressure sensitive switches.

Incidentally, since each of the pressure sensitive switches 40A to 40F has a cross-section larger than the diameter of the support spring 92 that is a wire rod (the width of the spring groove 7), a large force is applied to a portion, which corresponds to the wire rod, of the pressure sensitive switch 40E that is disposed above the support spring 92, which is a wire rod, in the vertical direction, as compared to other portions. That is, a force applied to the pressure sensitive switch 40E is non-uniform. However, since the pressure sensitive switches 40A to 40D and 40F are disposed at positions different from the positions present above the support spring 92, which is a wire rod, in the vertical direction, a force resisting the pressing force, which is applied from the cushion pad 93, is substantially uniformly applied to these pressure sensitive switches. Accordingly, the deterioration of the durability of the pressure sensitive switches 40A to 40D and 40F, which is caused by the non-uniformity of the applied forces, is significantly reduced as compared to that of the pressure sensitive switch 40E disposed above the support spring 92, which is a wire rod, in the vertical direction. Further, since a portion around a space in which the support springs 92 are stretched out is substantially closed and has poor air permeability, this portion easily receives heat from the support springs 92 that are generally made of metal. In this regard, since the pressure sensitive switches 40A to 40D and 40F are disposed at positions different from the positions present above the support spring 92 in the vertical direction, the deterioration of the durability of the pressure sensitive switches 40A to 40D and 40F, which is caused by heating, is significantly reduced as compared to that of the pressure sensitive switch 40E disposed above the support spring 92 in the vertical direction.

Meanwhile, since a large pressing force is applied to the pressure sensitive switch 40E, which is disposed above the support spring 92 in the vertical direction, as compared to the pressure sensitive switches 40A to 40D and 40F that are disposed on portions avoiding the positions present above the support spring 92 in the vertical direction, the sensitivity of the pressure sensitive switch per unit pressing force is improved.

The pressure sensitive switch 40E, which is disposed above the support spring 92 in the vertical direction in this way, is connected to the pressure sensitive switch 40F, which is disposed so as to avoid the position of the pressure sensitive switch 40E, in parallel. Accordingly, as described above, it is possible to equivalently obtain both an advantage that is obtained when a pressure sensitive switch is disposed above the support spring 92 in the vertical direction and an advantage that is obtained when a pressure sensitive switch is disposed so as to avoid the position of the pressure sensitive switch.

Further, the cushion member 51 is provided between the pedestal 60 that forms the bottom portion of the seating sensor 2 and the support spring 92. Accordingly, even though forces to be applied to the pressure sensitive switches 40A to 40F are non-uniform, the forces are transmitted to the pressure sensitive switches 40A to 40F after a difference between the forces is reduced. That is, since the efficiency of the transmission of the forces applied to the respective pressure sensitive switches 40A to 40F, which depends on the non-uniformity of the applied forces, is improved, the deterioration of durability is further reduced and the sensitivity of the pressure sensitive switches 40A to 40F is further improved.

Furthermore, when a person is normally seated in the seat device 9 including the backrest 96 and a load is applied to the cushion pad 93, a pressing force applied to the support spring 92 from the cushion pad 93 is relatively large in front of the hip points HP of the person who is normally seated, as compared to other portions as described above. Accordingly, according to the seat device 9 of this embodiment, since the pressure sensitive switches 40A to 40F are disposed in front of the hip points HP of a person who is normally seated, it is possible to appropriately the seating of the person. Moreover, according to the method of disposing the seating sensor 2 that is used in the seat device 9, since the seating sensor 2 is disposed on the support spring 92, it is possible to prevent discomfort that is caused by the seating sensor 2. In addition, since the pressure sensitive switches 40A to 40F are disposed in front of the hip points HP of a person who is normally seated, it is possible to appropriately the seating of the person.

Further, generally, when a person is seated substantially at the center of the cushion pad in the width direction, as described above, the cushion pad is substantially uniformly pressed on the left and right side of the vertical plane VF, which passes through the center of the cushion pad in the width direction, due to the pelvis that is spread in the left-and-right direction compared to in the front-and-rear direction. In this regard, it is not considered that a burden is placed on the center of the cushion pad 93 in the width direction. Accordingly, when a burden is placed on the seat device 9, a pressing force applied to the support spring 92 from the cushion pad 93 tends not to be symmetrical with respect to the vertical plane VF. Since the two pairs of pressure sensitive switches 40C and 40D, and 40E and 40F of this embodiment are disposed symmetrically with respect to the vertical plane VF passing through the center of the width of the seat device, it is possible to appropriately detect the seating of a person and to suppress the false detection of the burden.

### (Third embodiment)

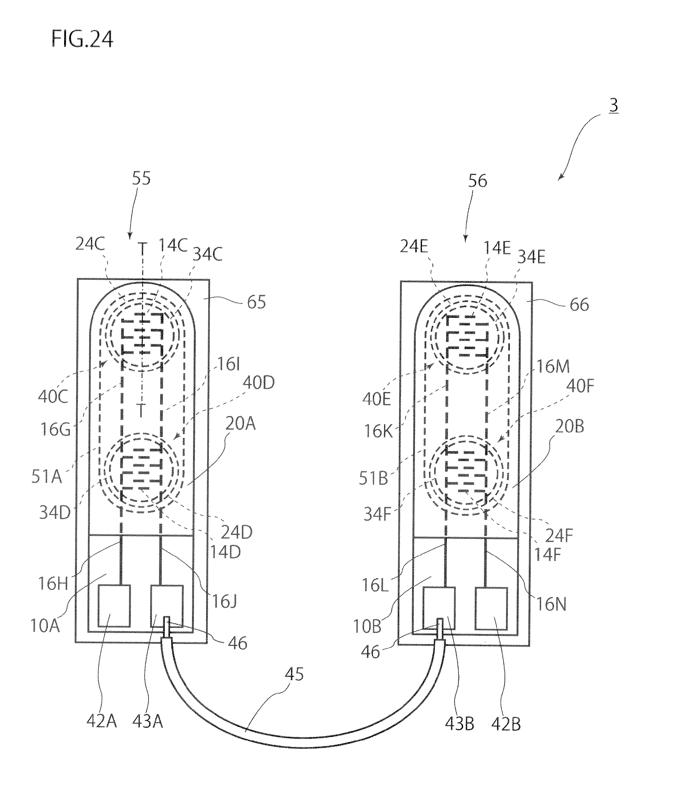

Next, a preferred third embodiment of the invention will be described in detail with reference to the drawings. Furthermore, the same reference numerals will be given to the same or equivalent components to those of the above-mentioned embodiment, and the description thereof will not be repeated, unless otherwise particularly described. FIG. 24 is a plan view illustrating a seating sensor that is used in a seat device of a third embodiment.

### <As for the seating sensor>

FIG. 24 is a plan view illustrating the seating sensor 3 of the third embodiment. As illustrated in FIG. 24, the seating sensor 3 of this embodiment is different from the seating sensor 1 of the first embodiment in that the pair of frame members 101A and 101B are omitted.

Further, the seating sensor 3 of this embodiment includes a first sensor section 55 and a second sensor section 56, which have shapes symmetrical to each other, instead of the sensor section 5 of the first embodiment, and includes a first pedestal 65 and a second pedestal 66 that have the same structure as the pedestal 6 of the first embodiment.

Furthermore, the seating sensor 3 of this embodiment includes a conductive wire 45 as a wire that electrically connects the first sensor section 55 to the second sensor section 56.

Meanwhile, the cushion member 52, which has been disposed on the second electrode sheet 20, is omitted in the first and second sensor sections 55 and 56 of this embodiment.

### <As for the sensor section>

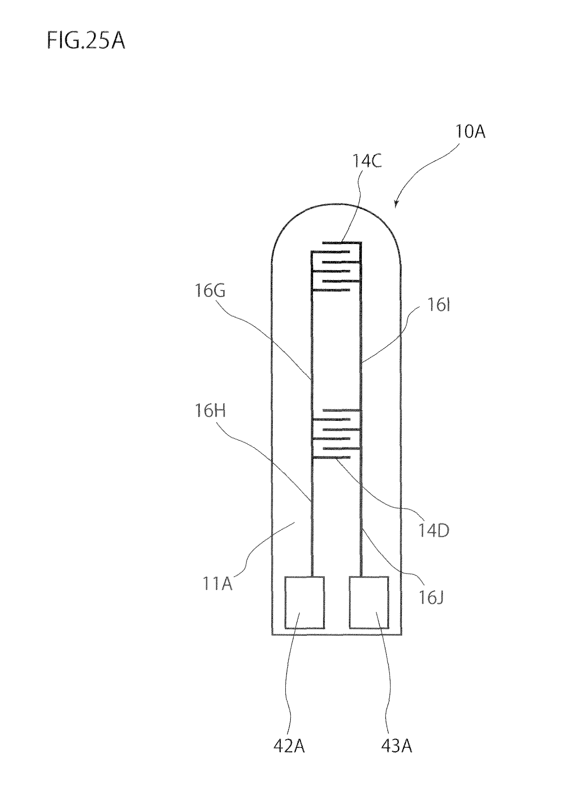

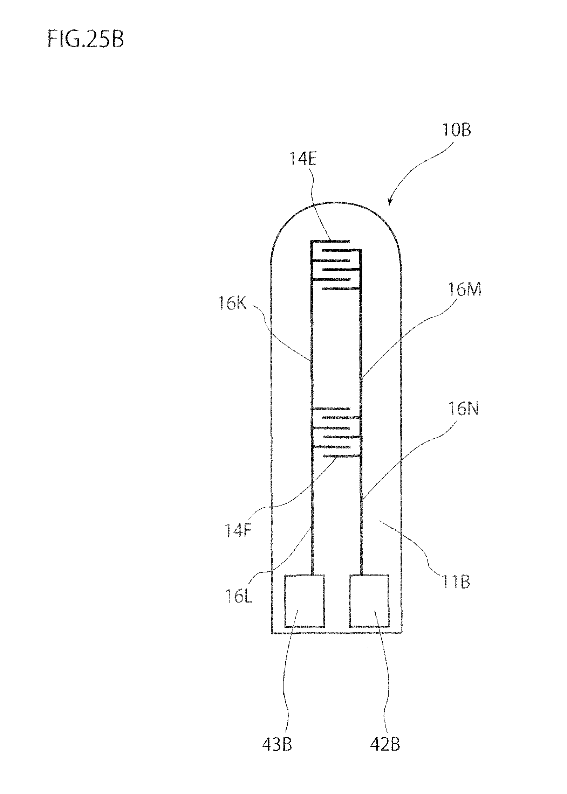

FIG. 25 is a plan view illustrating a first electrode sheet of the third embodiment. Specifically, FIG. 25A is a diagram illustrating a first electrode sheet 10A of the first sensor section 55 and FIG. 25B a diagram illustrating a first electrode sheet 10B of the second sensor section 56.

Since the first and second sensor sections 55 and 56 have shapes symmetrical to each other as described above, the first electrode sheet 10A and the first electrode sheet 10B have shapes symmetrical to each other as illustrated in FIG. 25.

As illustrated in FIG. 25A, the shape of the edge of one end portion of the first electrode sheet 10A is a semicircular shape, the shape of the edge of the other end portion thereof is a rectangular shape, and the first electrode sheet 10A is formed in the shape of a strip as a whole. Further, a first electrode 14C is provided so as to be spaced apart from the semicircular end portion by a predetermined interval, and a first electrode 14D is provided so as to be spaced apart from the first electrode 14C by a predetermined interval.

The first electrodes 14C and 14D are formed of comb-shaped electrodes having the same shape. In the comb-shaped electrode, a plurality of conductors parallel to each other are connected to each other on one side and a plurality of other conductors parallel to each other are connected to each other on the other side. Furthermore, the plurality of parallel other conductors connected to each other on the other side are provided between the plurality of parallel conductors connected to each other on one side so that the respective conductors are alternately arranged. Moreover, the plurality of parallel other conductors connected to each other on the other side and the plurality of parallel conductors connected to each other on one side are arranged at a constant interval and are insulated from each other. As described above, the comb-shaped electrode includes a set of parallel conductors, which are insulated from each other, in one electrode.

Wires 16G to 16J are provided along the longitudinal direction of a first insulating sheet 11A. Further, one parallel conductors of the first electrode 14C are connected to one end of the wire 16G, and the other parallel conductors thereof are connected to one end of the wire 16I. Furthermore, one parallel conductors of the first electrode 14D are connected to the other end of the wire 16G and one end of the wire 16H, and the other parallel conductors thereof are connected to the other end of the wire 16C and one end of the wire 16J.

Further, terminals 42A and 42B are formed in a substantially quadrangular shape, and are arranged along a direction perpendicular to the longitudinal direction of the first insulating sheet 11A at a position that is spaced apart from the rectangular end portion of the first insulating sheet 11A by a predetermined interval. Furthermore, the terminal 42A is connected to the other end of the wire 16H, and the terminal 43A is connected to the other end of the wire 16J.

In this way, one parallel conductors of the first electrode 14C, one parallel conductors of the first electrode 14D, and the terminal 42A are electrically connected to each other by the wires 16G and 16H, and the other parallel conductors of the first electrode 14C, the other parallel conductors of the first electrode 14D, and the terminal 43A are electrically connected to each other by the wires 16I and 16J.

Meanwhile, as illustrated in FIG. 25B, the first electrode sheet 10B, which has a shape symmetrical to the shape of the first electrode sheet 10A, includes a first insulating sheet 11B that is similar to the first insulating sheet 11A, a first electrode 14E that is disposed on the first insulating sheet 11B in the same manner as the first electrode 14C and has a shape symmetrical to the shape of the first electrode 14C, a first electrode 14F that is disposed on the first insulating sheet 11B in the same manner as the first electrode 14D and has a shape symmetrical to the shape of the first electrode 14D, wires 16K to 16N that are disposed on the first insulating sheet 11B in the same manner as the wires 16G to 16J, and terminals 42B and 43B that are disposed on the first insulating sheet 11B in the same manner as the terminals 42A and 43A and have shapes symmetrical to the shapes of the terminals 42A and 43A; as main components.

Further, one parallel conductors of the first electrode 14E are connected to one end of the wire 16M, and the other parallel conductors thereof are connected to one end of the wire 16K. Furthermore, one parallel conductors of the first electrode 14F are connected to the other end of the wire 16M and one end of the wire 16N, and the other parallel conductors thereof are connected to the other end of the wire 16K and one end of the wire 16L.

Moreover, the terminal 42B is connected to the other end of the wire 16N and the terminal 43B is connected to the other end of the wire 16L.

In this way, one parallel conductors of the first electrode 14E, one parallel conductors of the first electrode 14F, and the terminal 42B are electrically connected to each other by the wires 16M and 16N, and the other parallel conductors of the first electrode 14E, the other parallel conductors of the first electrode 14F, and the terminal 43B are electrically connected to each other by the wires 16K and 16L.

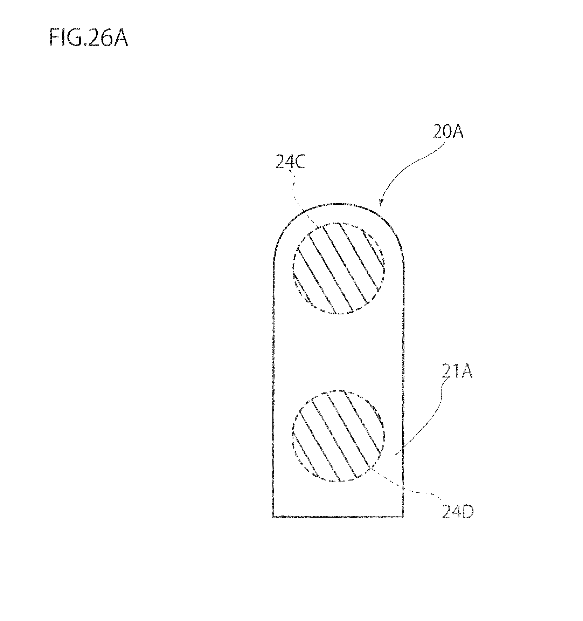

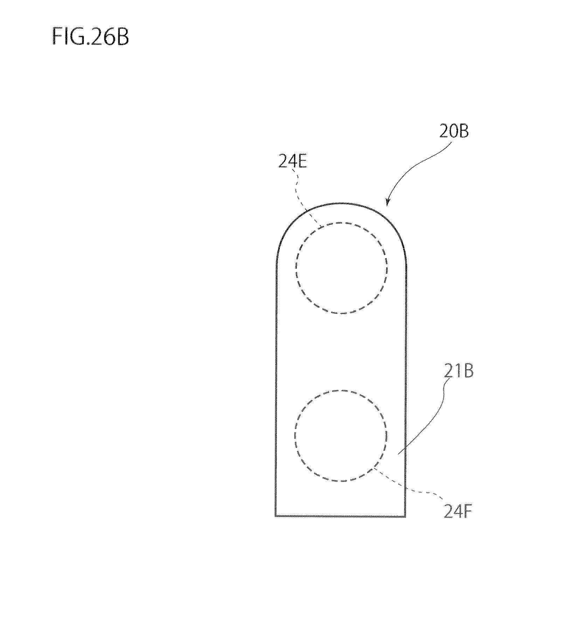

FIG. 26 is a plan view illustrating the second electrode sheet of the third embodiment. Specifically, FIG. 26A is a diagram illustrating a second electrode sheet 20A of the first sensor section 55, and FIG. 26B is a diagram illustrating a second electrode sheet 20B of the second sensor section 56. Since the first and second sensor sections 55 and 56 have shapes symmetrical to each other as described above, the second electrode sheet 20A and the second electrode sheet 20B have shapes symmetrical to each other as illustrated in FIG. 26.

As illustrated in FIG. 26A, a second insulating sheet 21A of the second electrode sheet 20A has the same width as the width of the first insulating sheet 11A and a length different from the length of the first insulating sheet 11A. In addition, the shape of the edge of one end portion of the second insulating sheet 21A is a semicircular shape that is the same as the shape of the edge of one end portion of the first insulating sheet 11A, the shape of the edge of the other end portion of the second insulating sheet 21A is a semicircular shape that is the same as the shape of the edge of the other end portion of the first insulating sheet 11A, and the second insulating sheet 21A is formed in the shape of a strip as a whole. Further, the length of the second insulating sheet 21A is set so that the terminals 42A and 43A provided on the first insulating sheet 11A are exposed to the outside as illustrated in FIG. 24 when one end of the first insulating sheet 11A and one end of the second insulating sheet 21A are aligned with each other and the first insulating sheet 11A is superimposed on the second insulating sheet 21A. Meanwhile, in this embodiment, the first and second insulating sheets 11A and 21A have the same flexibility, and are adapted to be bent to the same extent when the same force is applied to the first and second insulating sheets 11A and 21A.

Furthermore, second electrodes 24C and 24D are formed in a circular shape, and the sizes of the second electrodes 24C and 24D are set so that the first electrodes 14C and 14D are received inside the outer peripheries of the second electrodes 24C and 24D. In addition, the second electrodes 24C and 24D are provided at positions where first electrodes 14C and 14B are received inside the outer peripheries of the second electrodes 24C and 24D as illustrated in FIG. 24 when one end of the first insulating sheet 11A and one end of the second insulating sheet 21A are aligned with each other and the first insulating sheet 11A is superimposed on the second insulating sheet 21A.

Further, as illustrated in FIG. 26B, the second electrode sheet 20B, which has a shape symmetrical to the shape of the second electrode sheet 20A, includes a second insulating sheet 21B that is similar to the second insulating sheet 21A, a second electrode 24E that is disposed on the second insulating sheet 21B in the same manner as the second electrode 24C of the second electrode sheet 20A and has the same shape and size as the second electrode 24C, and a second electrode 24F that is disposed on the second insulating sheet 21B in the same manner as the second electrode 24D of the second electrode sheet 20A and has the same shape and size as the second electrode 24D, as main components.

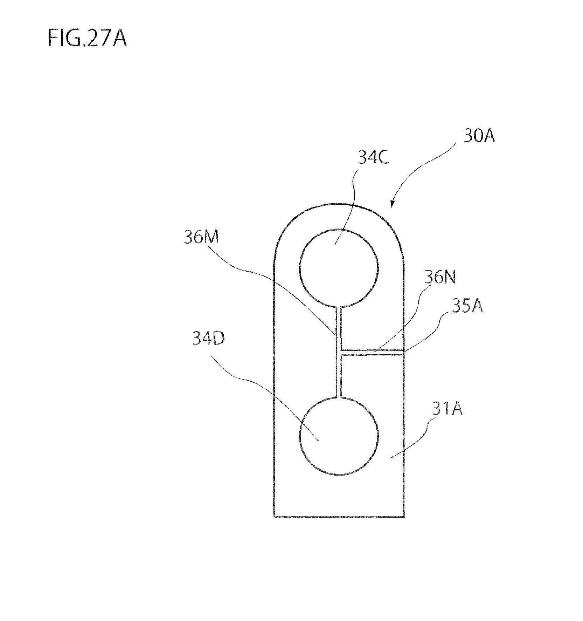

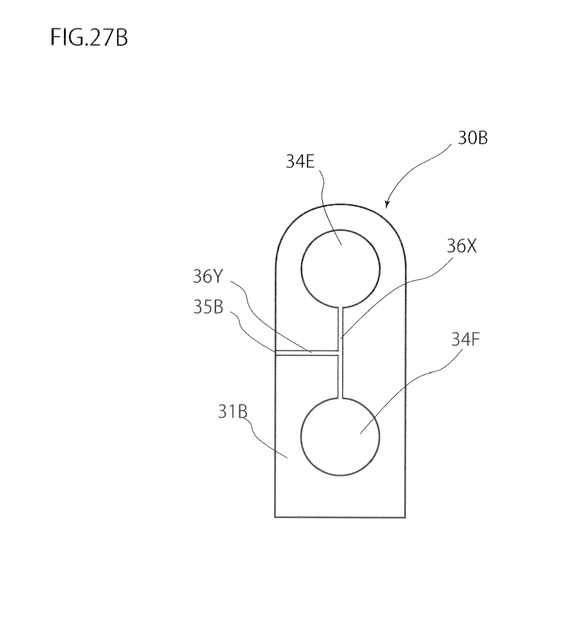

FIG. 27 is a plan view illustrating spacers of the third embodiment. Specifically, FIG. 27A is a diagram illustrating a spacer 30A of the first sensor section 55, and FIG. 27B is a diagram illustrating a spacer 30B of the second sensor section 56. Since the first and second sensor sections 55 and 56 have shapes symmetrical to each other as described above, the spacers 30A and 30B have shapes symmetrical to each other as illustrated in FIG. 27.

The spacer 30A is formed of an insulating sheet 31A having flexibility. Further, as illustrated in FIG. 27A, the contour of the spacer 30A corresponds to the second electrode sheet 20A. Furthermore, openings 34C and 34D having the same size are formed in the spacer 30A. The peripheral edges of the openings 34C and 34D are formed in a substantially circular shape, the diameters of the openings 34C and 34D are slightly smaller than the diameters of the second electrodes 24C and 24D, and the sizes of the openings 34C and 34D are set so that the first electrodes 14C and 14D are received inside the outer peripheries of the second openings 34C and 34D. Moreover, the openings 34C and 34D are formed at positions where the respective openings 34C and 34D are received inside the outer peripheries of the respective second electrodes 24C and 24D and the first electrodes 14C and 14D are received inside the peripheral edges of the openings 34C and 34D as illustrated in FIG. 24 when the spacer 30A is superimposed on the second electrode sheet 20A and the openings 34C and 34D are viewed along a direction perpendicular to the spacer 30A.

In addition, a slit 36M, which is an air vent slit and spatially connects the opening 34C to the opening 34D, is formed in the spacer 30A. Further, a gas outlet 35A and a slit 36N, which connects the gas outlet 35A to the slit 36M, are formed in the spacer 30A. Accordingly, the respective openings 34C and 34D are spatially connected to the outside of the spacer 30A through the gas outlet 35A and the slits 36M and 36N.

Further, as illustrated in FIG. 27B, the spacer 30B, which has a shape symmetrical to the shape of the spacer 30A, is formed of an insulating sheet 31B that is the same as the insulating sheet of the spacer 30A. Openings 34E and 34F, which are formed at the same positions as the openings 34C and 34D of the spacer 30A and have the same shape and size, are formed in the spacer 30B. Furthermore, a slit 36X, which is an air vent slit and spatially connects the opening 34E to the opening 34F, is formed in the spacer 30B. In addition, a gas outlet 35B and a slit 36Y, which connects the gas outlet 35B to the slit 36X, are formed in the spacer 30B. Accordingly, the respective openings 34E and 34F are spatially connected to the outside of the spacer 30B through the gas outlet 35B and the slits 36X and 36Y.

Meanwhile, an adhesive (not illustrated), which adheres to the first electrode sheets 10A and 10B and the second electrode sheets 20A and 20B, is applied on both surfaces of the spacers 30A and 30B.

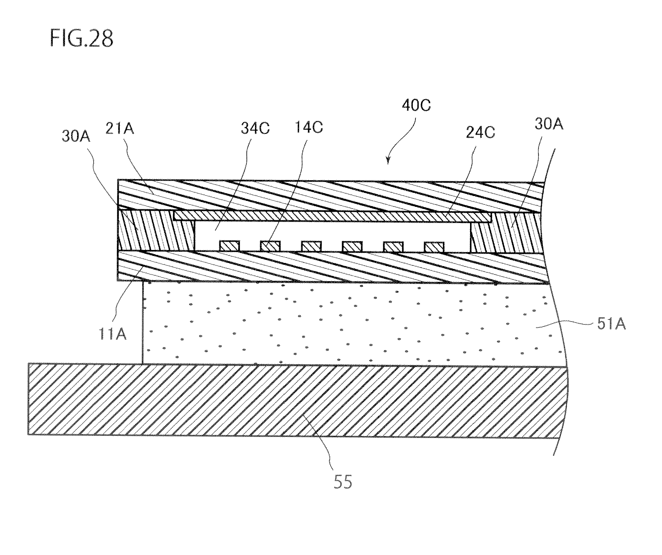

FIG. 28 is a diagram illustrating an aspect of the cross-section taken along line T-T of FIG. 24. As illustrated in FIGS. 24 and 28, the first electrode sheet 10A (10B) and the second electrode sheet 20A (20B) are superimposed with the spacer 30A (30B) interposed therebetween and are fixed by the adhesive applied on both surfaces of the spacer 30A (30B) as described above, so that the first and second sensor sections 55 and 56 of the seating sensor 3 are integrated. Pressure sensitive switches 40C to 40F are formed in this way.

Further, a cushion member 51A is formed so as to be received inside the outer periphery of the second insulating sheet 21A as illustrated in FIG. 24. Furthermore, the cushion member 51A is disposed so as to cover the openings 34C and 34D of at least the spacer 30A through the first insulating sheet 11A when viewed from a direction perpendicular to the spacer 30A. Likewise, a cushion member 51B, which is similar to the cushion member 51A provided in the first sensor section 55, is provided on the side of the first insulating sheet 11B of the second sensor section 56 opposite to the spacer 30B, and the cushion member 51B is disposed so as to cover the openings 34E and 34F of at least the spacer 30B through the first insulating sheet 11B when viewed from a direction perpendicular to the spacer 30B.

Meanwhile, in this embodiment, the thicknesses of portions of the cushion members 51A and 51B to be crushed are not smaller than the half of a distance between the electrodes, which face each other, of the respective pressure sensitive switches 40C to 40F.

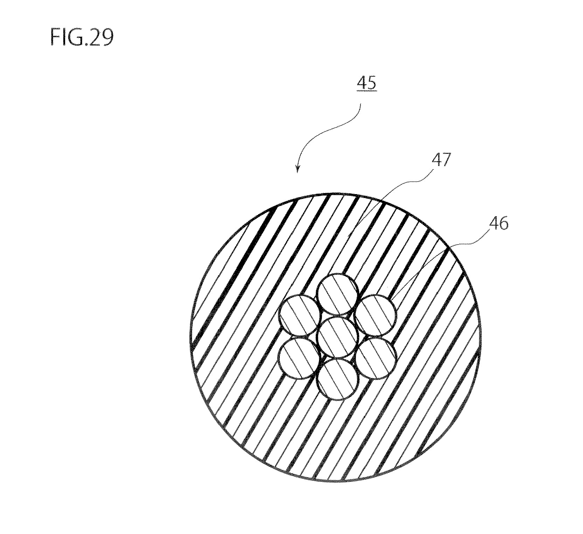

The first and second sensor sections 55 and 56, which are formed as described above, are electrically connected to each other by the conductive wire 45 as described above. FIG. 29 is a diagram illustrating an aspect of the structure of the cross-section of the conductive wire 45 of FIG. 24 perpendicular to a longitudinal direction. As illustrated in FIG. 29, the conductive wire 45 includes conducting wires 46 that are formed of stranded wires made of metal, and an insulating layer 47 that covers the outer peripheries of the conducting wires 46. Further, as illustrated in FIG. 24, the conducting wires 46 are exposed to the outside from the insulating layer 47 at both ends of the conductive wire 45, one ends of the conducting wires 46 are connected to the terminal 43A, and the other ends of the conducting wires 46 are connected to the terminal 43B.

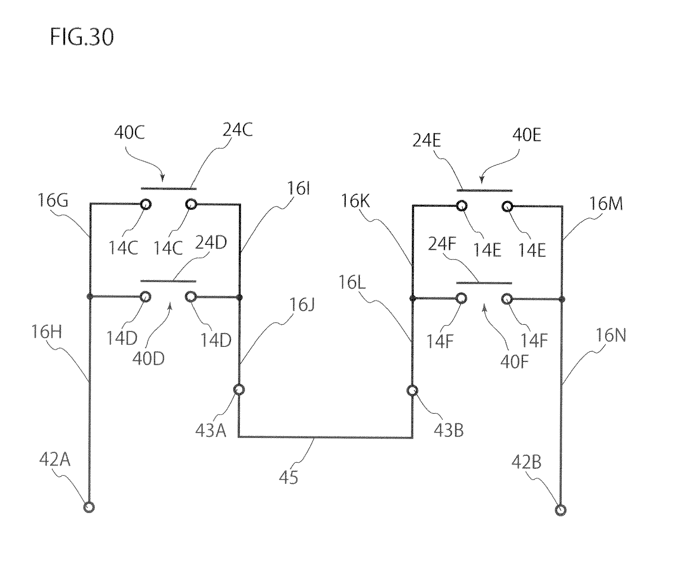

FIG. 30 is a circuit diagram illustrating the circuit configuration of the first sensor section 55, the second sensor section 56, and the conductive wire 45 by an equivalent circuit. A pressure sensitive switch group, which includes the pressure sensitive switches 40C and 40D of the first sensor section 55, forms an OR circuit, and a pressure sensitive switch group, which includes the pressure sensitive switches 40E and 40F of the second sensor section 56, forms an OR circuit. Furthermore, the pressure sensitive switch group including the pressure sensitive switches 40C and 40D and the pressure sensitive switch group including the pressure sensitive switches 40E and 40F form an AND circuit. In this way, the pressure sensitive switches 40C to 40F of the sensor section form an AND-OR circuit.

### <As for the seat device>

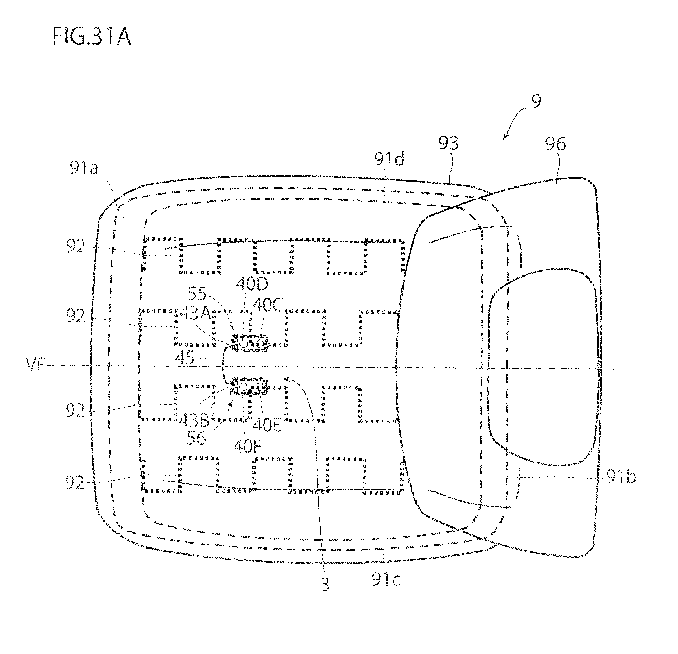

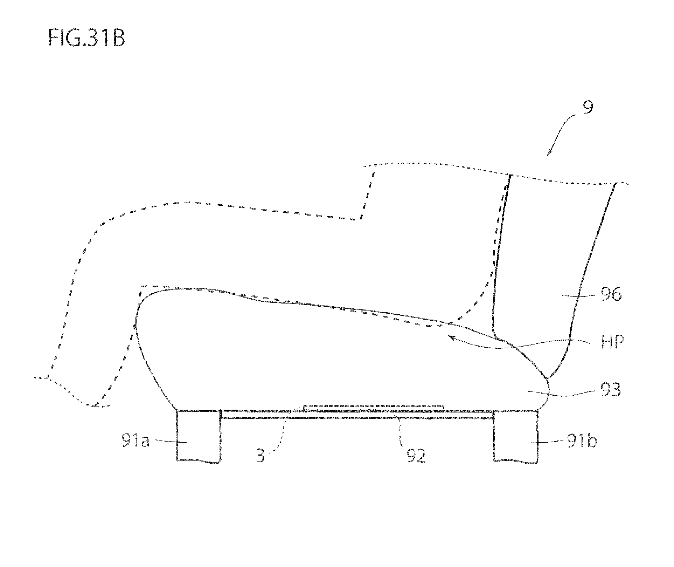

FIG. 31 is a diagram illustrating the seat device of the third embodiment. Specifically, FIG. 31A is a diagram illustrating an aspect of the seat device 9 that is viewed from above, and FIG. 31B is a diagram illustrating an aspect of the seat device 9 that is viewed from a lateral direction.

As illustrated in FIGS. 31A and 31B, the first and second sensor sections 55 and 56 are disposed on the plurality of support springs 92 that are stretched out in the front-and-rear direction of the seat frame 91, and are interposed between the support springs 92 and the cushion pad 93.

Specifically, the spring groove 7 of the first pedestal 65 is fitted to one bent portion of the support spring 92, which is closest to the vertical plane VF, among the support springs 92 that are positioned on the right side of the vertical plane VF passing through the center of the cushion pad 93 in the width direction. In this way, the first pedestal 65 is disposed on one bent portion of the right support spring 92, which is closest to the vertical plane VF, so as to cross the bent portion. Further, the pressure sensitive switches 40C and 40D of the first sensor section 55, which is disposed on the seating surface side of the first pedestal 65, are disposed along the front-and-rear direction of the cushion pad 93.

Meanwhile, the spring groove 7 of the second pedestal 66 is fitted to one bent portion, which is positioned symmetrically to the first pedestal 65 with respect to the vertical plane VF, of the support springs 92 that are positioned on the left side of the vertical plane VF. In this way, the second pedestal 66 is disposed on one bent portion of the left support spring 92, which is closest to the vertical plane VF, so as to cross the bent portion. Further, the pressure sensitive switches 40E and 40F of the second sensor section 56, which is disposed on the seating surface side of the first pedestal 66, are disposed along the front-and-rear direction of the cushion pad 93.

Furthermore, all of the pressure sensitive switches 40C to 40F are disposed so as to be positioned in front of the hip points HP of a person who is normally seated on the seat frame 91.

When a pressing force is applied to the pressure sensitive switches 40C to 40F from the cushion pad 93 according to the seating of a person, the second electrodes 24C to 24F come into contact with the respective parallel conductors of the first electrodes 14C to 14F. For this reason, a set of parallel conductors, which are insulated from each other, of the first electrodes 14C to 14F are electrically connected to each other by the second electrodes 24C to 24F. In this way, the pressure sensitive switches 40C to 40F are turned on. Meanwhile, since the pressure sensitive switches 40C to 40F form an AND-OR circuit as described above, electricity is conducted between the terminals 42A and 42B when at least one of the pressure sensitive switches 40C and 40D and at least one of the pressure sensitive switches 40E and 40F are turned on. In this way, the seating of a person is detected by a measurement section (not illustrated) on the basis of a signal that is sensed by the sensor section 5.

As described above, in the case of this embodiment, the non-linear spring groove 7 to which one bent portion of one support spring 92 can be fitted is formed on each of the first and second pedestals 65 and 66. For this reason, as in the case of the second embodiment, a spring portion to be fitted can be intuitively perceived and it is possible to position the first and second pedestals 65 and 66 on the spring portion that is present in the middle of one support spring 92.

When the first and second pedestals 65 and 66 are positioned as described above, the first and second pedestals 65 and 66 and the pressure sensitive switches 40C to 40F that are disposed on the seating surface sides of these pedestals are interposed between the plurality of support springs 92 and the cushion pad 93 that is placed on these support springs 92. Accordingly, the cushion pad 93 is interposed between the seating surface of the cushion pad 93 and the pressure sensitive switches 40C to 40F. That is, since the pressure sensitive switches 40C to 40F are positioned on the spring portion by the first and second pedestals 65 and 66, it is possible to prevent discomfort that is caused by the pressure sensitive switches.

Further, when the pressure sensitive switches 40C to 40F are positioned on the spring portions, not only a pressing force applied from the cushion pad but also a biasing force of the support springs 92 resisting the pressing force acts on the pressure sensitive switches 40A to 40F from the first and second pedestals 65 and 66 as in the second embodiment. For this reason, the sensitivity of the pressure sensitive switches 40C to 40F per unit pressing force becomes good. Accordingly, since the pressure sensitive switches 40C to 40F are positioned on the spring portions by the first and second pedestals 65 and 66 in the case of this embodiment, it is possible to appropriately detect seating.

Furthermore, since the spring grooves 7 of the first and second pedestals 65 and 66 are formed in a non-linear shape so that the plurality of bent portions of one support spring 92 can be fitted to the spring grooves, the first and second pedestals 65 and 66 can be disposed so as to cross the bent portions of the spring as in the second embodiment. Accordingly, it is possible to significantly suppress the shift of the first and second pedestals 65 and 66 in the longitudinal direction of the support spring 92. Further, the inclination of the pressure sensitive switches, which are disposed on the seating surface side of the pedestals, with respect to the support spring formed of a wire rod is significantly reduced, so that it is possible to suppress the degradation of the sensitivity of the switches.

Furthermore, in the case of this embodiment, the pressure sensitive switches 40C and 40D that are disposed on the seating surface side of the first pedestal 65 and the pressure sensitive switches 40E and 40F that are disposed on the seating surface side of the second pedestal 66 are connected to each other by the conductive wire 45 having flexibility. For this reason, the positions where the first pedestal 65 on which the pressure sensitive switches 40C and 40D are disposed and the second pedestal 66 on which the pressure sensitive switches 40E and 40F are disposed are to be disposed can be freely selected from the bent portions of the plurality of support springs 92 without rewiring. Accordingly, it is possible to dispose the first and second pedestals 65 and 66 at positions where the sensitivity of the pressure sensitive switches becomes good, respectively.

Meanwhile, if the conductive wire 45 is omitted, the spacers of the first and second pedestals 65 and 66 are connected to each other, and the pair of insulating sheets are connected to each other as in the first embodiment, the electrodes of the pressure sensitive switches can be print-wired on the insulating sheets. For this reason, the case of the first embodiment is preferable in terms of the connection between the electrodes of the pressure sensitive switches without contacts between the electrodes and the conductive wire.

The invention has been described above using the first to third embodiments as examples, but the invention is not limited to these embodiments.

For example, the pair of frame members 101A and 101B have been disposed along the left-and-right direction of the cushion pad 93 in the first embodiment. However, the pair of frame members 101A and 101B may be disposed along the front-and-rear direction of the cushion pad 93.

As illustrated in FIGS. 10 and 11, it is found that the bending amount of the cushion pad 93, which acts on the pressure sensitive switch 40A when a person is seated, is increased when the pair of frame members 101A and 101B are disposed along the front-and-rear direction of the cushion pad 93 as compared to a case in which the pair of frame members 101A and 101B are disposed along the left-and-right direction of the cushion pad 93.

The reason for this is that a space between the frame members 101A and 101B is opened in the front-and-rear direction when the pair of frame members 101A and 101B are disposed along the front-and-rear direction of the cushion pad 93. For this reason, pressure applied in the front-and-rear direction of the lower surface of the cushion pad can be directly transmitted as compared to a case in which the pair of frame members 101A and 101B are disposed along the left-and-right direction of the cushion pad 93.

Accordingly, when the pair of frame members 101A and 101B are disposed along the front-and-rear direction of the cushion pad 93, the bending amount of the cushion pad 93, which acts on the pressure sensitive switch 40A when a person is seated, can be increased as compared to a case in which the pair of frame members 101A and 101B are disposed along the left-and-right direction of the cushion pad 93. Therefore, since it is possible to increase the contact pressure between the pressure sensitive switch 40A and the lower surface of the cushion pad, it is possible to more appropriately detect seating.

Incidentally, since the bending amount of the cushion pad 93, which acts on the pressure sensitive switch 40A, is large when the pair of frame members 101A and 101B are disposed along the front-and-rear direction of the cushion pad 93, the pressure sensitive switch can be reliably turned on even though the heights of the frame members 101A and 101B are high. As a result, it is possible to secure a larger gap GP between the cushion pad 93 and the pressure sensitive switch 40A when pressure is not applied to the cushion pad 93. That is, when the pair of frame members 101A and 101B are disposed along the front-and-rear direction of the cushion pad 93, the adjustable range of the heights of the frame members 101A and 101B is widened. Accordingly, since it is possible to increase the control amount of the contact pressure between the pressure sensitive switch 40A and the lower surface of the cushion pad by the heights, it is useful that the pair of frame members 101A and 101B are disposed along the front-and-rear direction of the cushion pad 93.

Meanwhile, the pair of frame members 101A and 101B may be connected to the pedestal 60 of the second or third embodiment along the left-and-right direction or the front-and-rear direction of the cushion pad 93 with the respective pressure sensitive switches 40A to 40F interposed therebetween.

Further, in the embodiment, the spring groove 7 or 70, which is formed on the surface opposite to the seating surface of the pedestal 6 or 60, is fitted to one support spring 92 from above, so that the pedestal 6 or 60 has been fixed. However, a method of fixing the pedestal to the spring is not limited to the embodiment. For example, the seating surface of the pedestal 6 or 60 may be used as an object on which the groove is to be formed, and the groove formed on the seating surface may be fitted to one support spring 92 from the lower side of the support spring 92 so that the pedestal 6 or 60 is fixed to one support spring 92. Meanwhile, when this fixing method is applied, one or more pressure sensitive switches may be disposed along a bottom portion of the groove formed on the seating surface of the pedestal 6 or 60 so that the pressure sensitive switches are interposed between the spring and the groove.

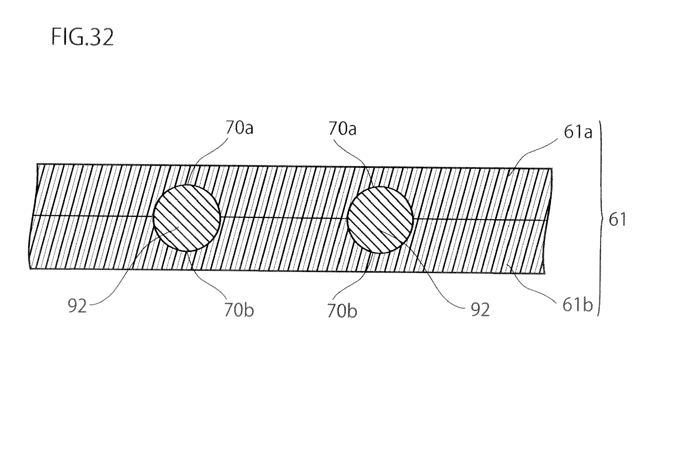

Furthermore, a pedestal 61 illustrated in FIG. 32 may be used. FIG. 32 is a diagram illustrating aspects of the cross-sections of springs and a pedestal corresponding to a width direction of a cushion pad. As illustrated in FIG. 32, this pedestal includes a pair of plate members 61a and 61b made of a resin. Non-linear spring grooves 70a and 70b to which bent portions of one support spring 92 can be fitted are formed on one wide surfaces of these plate members 61a and 61b. Further, the pair of plate members 61a and 61b are integrated with each other when the spring portions are being fitted to these spring grooves 70a and 70b, so that the pedestal 61 is formed. Even when this pedestal 61 is applied, it is possible to obtain the same effects as the embodiment. Meanwhile, a space may be formed between the plate members 61a and 61b. The spring grooves 70a and 70b, which have a vertical cross-section having the same shape as an arc of a part of the vertical cross-section of the spring formed of, for example, a wire rod, may be applied when this space is formed.

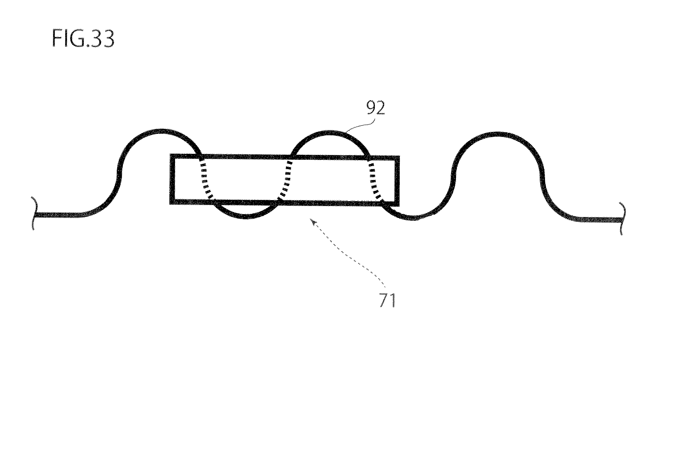

Furthermore, a spring groove 71 to which a plurality of spring portions formed between the maximum points can be fitted along the longitudinal direction of the spring as illustrated in FIG. 33 may be used instead of the spring groove 7 of the pedestal 6 of the embodiment or the spring groove 7 or 70 of the pedestal 60, the first pedestal 65, or the second pedestal 66. As the number of the bent portions of the support spring 92 to be fitted is increased, it is possible to increase the stability of the pedestal 6 or 60, the first pedestal 65 or the second pedestal 66 relative to the spring made of a wire rod. However, as described above, in terms of the improvement of the durability of the support spring and the pedestal, it is preferable that a recess capable of being fitted to one bent portion of one support spring 92 be formed.

Further, the spring groove 7 or 70, which can be fitted to the bent portion of one support spring 92, has been formed in the embodiment, but a recess, which can be fitted to bent portions of two or more support springs 92, may be formed. However, as described above, in terms of the improvement of the durability of the support spring 92 and the pedestal 6, it is preferable that a spring groove (recess) capable of being fitted to a bent portion of one support spring 92 be formed.

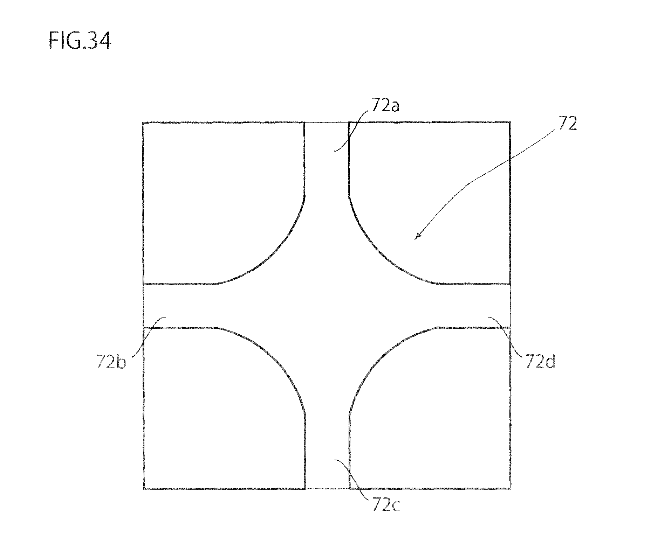

Furthermore, the width of the spring groove 7 or 70 of the embodiment has been the same as the diameter of one spring, but may not be the same as the diameter of one spring. For example, an area, which is surrounded by a broken line, of one surface of the pedestal 60 illustrated in FIG. 20 may be cut out so that a recess to which the entire bent portion of one spring can be fitted is formed. Moreover, a cross-shaped recess 72 may be formed as illustrated in FIG. 34. This recess 72 includes groove portions 72a to 72d that have substantially the same width as the diameter of the support spring 92 and extend from middle portions of side ends of the pedestal in directions orthogonal to the side ends. These groove portions 72a to 72d are widened outward in an arc shape at the central area, and the groove portions adjacent to each other are connected to each other. When this recess 72 is formed, it is possible to fit the recess to a bent portion even though angles of a plurality of bent portions of the support spring 92 are different from each other. Accordingly, it is possible to improve versatility.

Further, the plate-like convex portions 8x and 8y having elasticity have been made of a resin in the embodiment, but do not need to be necessarily made of a resin. Furthermore, the convex portions 8x and 8y have been connected while facing each other at the same interval from the center of the spring groove 7 in the longitudinal direction. However, the plate-like convex portions 8x and 8y having flexibility may be connected at a predetermined interval in the longitudinal direction of the spring groove 7 while facing each other at the same interval from the center of the spring groove 7 in the longitudinal direction. Moreover, convex portions, which are connected to one end of the spring groove 7 in the longitudinal direction and extend to the vicinity of the other end, may be applied. Further, plates, which are made of a resin and can slide on a slide groove formed parallel to one surface of the pedestal 6, may be applied to the inner peripheral surface of the spring groove 7. Furthermore, tapes may be put instead of the convex portions 8x and 8y. In addition, open ends of the convex portions 8x and 8y may be bent toward the space of the spring groove 7 so as to have the shape of a hook. Meanwhile, the convex portions 8x and 8y may be omitted as in the example illustrated in FIG. 22, and portions other than the above-mentioned convex portions may be applied.

Further, the first and second pedestals 65 and 66 have been formed separately from each other in the third embodiment, but the first and second pedestals 65 and 66 may be integrally connected to each other as in the second embodiment. For example, an aspect in which one side surface of the first pedestal 65 and one side surface of the second pedestal 66 are integrally molded or an aspect in which a part of the first pedestal 65 is fixed to one end of a plate-like clamp and a part of the second pedestal 66 is fixed to the other end thereof may be exemplified as an aspect of this connection. When the first and second pedestals 65 and 66 are integrally connected to each other in this way, each of the first and second pedestals 65 and 66 is supported by one support spring 92 so as to cross the bent portion of the support spring 92 and the first and second pedestals 65 and 66 are supported by two support springs 92 so as to cross the two support springs 92. Accordingly, when the first and second pedestals 65 and 66 are integrally connected to each other, it is possible to increase the stability of the pedestal relative to the spring made of a wire rod.

Furthermore, the number of pressure sensitive switches has been two in the first embodiment, but may be three or more. The number of pressure sensitive switches has been six in the second embodiment, but may be five or less and may be seven or more. Meanwhile, the number of pressure sensitive switches has been four in the third embodiment, but may be three or less and may be five or more. In short, at least one pressure sensitive switch may be provided on one pedestal. Meanwhile, when the pressure sensitive switches are connected in parallel, the number of the pressure sensitive switches has been two in the embodiment, but it is sufficient to be 2 or more. In addition, when sets of pressure sensitive switch groups to be connected in parallel are provided, the number of the sets of pressure sensitive switch groups has been two in the embodiment but may be one or three or more. However, in terms of symmetry, it is preferable that the number of the sets of the pressure sensitive switch groups to be connected in parallel be an even number. Meanwhile, the pressure sensitive switch groups to be connected in parallel may be omitted, and the pressure sensitive switches 40A and 40B may be omitted and the pressure sensitive switch groups 40C and 40D, and 40E and 40F to be connected in parallel may be connected in series to form an AND/OR circuit.

Further, all or a part of the pressure sensitive switches 40A to 40F of the first or second embodiments may be formed in a comb shape, and the sensor section 5 of the first embodiment or the sensor section 50 of the second embodiment may be divided and the divided sensor sections may be connected to each other by the conductive wire 45. Of course, forms other than these exemplified forms may be applied.

Furthermore, the first electrodes 14A to 14F and the second electrodes 24A to 24F of the respective pressure sensitive switches 40A to 40F have has the same and size and have completely overlapped each other, but may have different sizes, different shapes, or the like within a range in which a pressing force can be sensed. For example, the diameters of the openings 34A and 34B of the pressure sensitive switches 40A and 40B may be larger than the diameters of the openings 34C to 34F of the pressure sensitive switches 40C to 40F. That is, the diameters of the openings of at least two pressure sensitive switches may be different from each other. When a person is seated in the seat device, a pressing force applied to the seat frame 91 from the cushion pad 93 varies according to positions on the seat frame 91. However, if the seating sensor 1 is formed in this way, it is possible to dispose a pressure sensitive switch of which the diameter of the opening is large at a position to which a relative small pressing force is applied from the cushion pad 93 and to dispose a pressure sensitive switch of which the diameter of the opening is small at a position to which a relative large pressing force is applied, on the seat frame 91. If the seating sensor is disposed in this way, the insulating sheets 11 and 21 of the respective pressure sensitive switches are appropriately bent when a person is seated on the cushion pad 93 and different pressing forces are applied to the pressure sensitive switches of which the diameters of the openings formed in the spacers 30 are different from each other. Accordingly, the respective pressure sensitive switches 40A to 40F can be appropriately turned on. For this reason, it is possible to appropriately detect the seating of a person. Further, when the diameters of the openings of at least two pressure sensitive switches are different from each other, it is preferable that the pressure sensitive switches of which the diameters of the openings are different from each other be electrically connected to each other in series.

Furthermore, when the diameters of the openings of at least two pressure sensitive switches are set to be different from each other as described above, it is preferable that at least two pressure sensitive switches of which the openings have the same diameter be provided and one or more pressure sensitive switches of which the openings have the same diameter be disposed on each of the left and right sides of the vertical plane VF. Since a person is generally seated at the center of the cushion pad 93 in the width direction, it is possible to more appropriately detect the seating of the person and to suppress the false detection of a burden, which is not disposed at the center of the cushion pad 93 in the width direction, as the seating of the person. Moreover, in the case of this structure, it is preferable that at least one set of pressure sensitive switches which are disposed on the left and right sides of the vertical plane VF and of which the openings have the same diameter be disposed along the width direction of the cushion pad 93, and it is more preferable that at least one set of pressure sensitive switches which are disposed on the left and right sides of the vertical plane VF and of which the openings have the same diameter be disposed at positions symmetrical to each other with respect to the vertical plane VF. If the seating sensor is formed in this way, it is possible to more appropriately detect the seating of a person and to further suppress the false detection of a burden as the seating of the person. In order to form the seating sensor in this way, for example, the positions of the pressure sensitive switches 40A to 40F may set in the same manner as the above-mentioned embodiment, the diameters of the openings 34A and 34B of the pressure sensitive switches 40A and 40B may be larger than the diameters of the openings 34C to 34F of the pressure sensitive switches 40C to 40F, and the openings 34C, 34D, and 34B of the pressure sensitive switches 40C, 40D, and 40B may be adapted to have the same diameter and may be adapted to have the same diameter as the openings 34E, 34F, and 34A of the pressure sensitive switches 40E, 40F, and 40A.

Further, in the embodiment, only the cushion member 51 may be provided without the cushion member 52. Even in this case, in the seating sensor, the cushion member 51 presses the insulating sheet 11 so that the insulating sheet 11 close to a seat pan enters the openings of the spacer, and the insulating sheet 21 close to the cushion pad 93 is bent so as to enter the openings 34A to 34F of the spacer 30 by the elastic force of the cushion pad 93. The pair of insulating sheets are bent in this way, so that the pair of electrodes facing each other through the openings of the spacer can come into contact with each other. Accordingly, the pressure sensitive switches can be appropriately turned on, so that it is possible to appropriately detecting seating. Furthermore, the cushion members 51 and 52 are not necessarily needed. Since the cushion pad 93 presses the insulating sheet 21 even in this case, it is possible to sense the seating of a person.

Further, when the pair of cushion members 51 and 52 are provided as in the embodiment, the cushion members 51 and 52 have had the same elastic force and same thickness. However, the invention is not limited thereto, and the cushion members 51 and 52 may have elastic forces different from each other and may have thicknesses different from each other.

Furthermore, when the pair of cushion members 51 and 52 are provided as in the embodiment, the cushion members 51 and 52 may have shapes different from each other when viewed from a direction perpendicular to the seating sensor 1. In this case, the cushion member 51 may be disposed so as to cover at least the openings 34A to 34F of the spacer 30 through the first insulating sheet 11, the cushion member 52 may be disposed so as to cover at least the openings 34A to 34F of the spacer 30 through the second insulating sheet 21, and at least one of the cushion members 51 and 52 may be provided only at a position that overlaps the openings of the spacer 30.

Further, in the embodiment, the first and second insulating sheets 11 and 21 have had the same flexibility, and have been adapted to be bent to the same extent when the same force is applied to the first and second insulating sheets 11 and 21. However, the first and second insulating sheets 11 and 21 may have flexibilities different from each other.

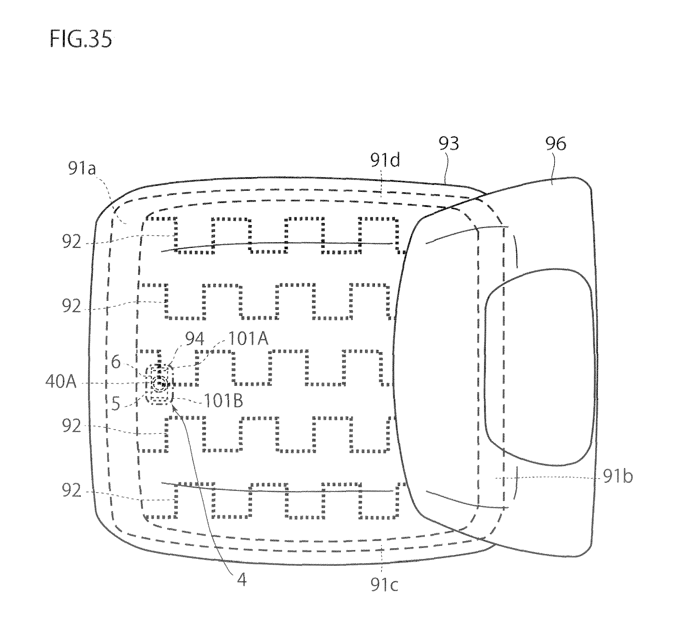

Meanwhile, the components of the above-mentioned first to third embodiments may be appropriately combined, omitted, change, and further include well-known techniques other than the contents described in the first to third embodiments and other embodiments without departing from the scope of the invention. For example, FIG. 35 is a diagram illustrating a seating sensor and a seat device of another embodiment with the same viewpoint as FIG. 7A. The seat device illustrated in FIG. 35 is different from the seat device of the first embodiment in that a seating sensor 4 is provided instead of the seating sensor 1 of the first embodiment and a new support spring 92 is provided in the midst of the four support springs 92 of the first embodiment. The seating sensor 4 is different from the seating sensor 1 of the first embodiment, which is provided with the rectangular sensor section 5 including the plurality of pressure sensitive switches 40A and 40B, in that a circular sensor section 5 including one pressure sensitive switch 40A is provided. Further, the seating sensor 4 is different from the seating sensor 1 of the first embodiment, which is provided with the plurality of pedestals 6, in that one pedestal 6 on which the pressure sensitive switch 40A is disposed is provided. Furthermore, the seating sensor 4 is different from the seating sensor 1 of the first embodiment, which includes the pair of frame members 101A and 101B disposed along the left-and-right direction of the cushion pad, in that a pair of frame members 101A and 101B disposed along the front-and-rear direction of the cushion pad 93 are provided. The pedestal 6 of this seating sensor 4 is fitted to one bent portion formed at the front end portion of the support spring 92, which is present in the midst, among the plurality of support springs 92 that are disposed parallel to each other. Further, the pair of pair of frame members 101A and 101B of the pedestal 6 support the cushion pad 93 by using the support springs 92 as a support base while a gap is formed between the front end portion of the cushion pad 93 and the pressure sensitive switch 40A placed on the pedestal 6. When one pedestal 6 is used as described above, it is possible to reduce a space, which is occupied by the pedestal 6 below the cushion pad 93, as compared to a case in which a plurality of pedestals 6 are used as in the first and third embodiments. As a result, it is possible to easily secure a space that is occupied by electronic components and the like to be dispsoed below the cushion pad. When one pressure sensitive switch 40A is placed one pedestal 6 in addition to this, it is possible to avoid connecting the pressure sensitive switches 40A and 40B by connecting the spacer 30 to the pair of insulating sheets 11 and 21 as in the first embodiment. Furthermore, it is also possible to avoid connecting the pressure sensitive switches 40A and 40B by the conductive wire 45 as in the third embodiment. Accordingly, it is possible to reduce poor electric contact and to save a space as compared to the first and third embodiments.

### Industrial Applicability

According to the invention, there are provided a seating sensor and a seat device that can appropriately detect seating while preventing discomfort.

### Reference Signs List

- 1 to 4: seating sensor
- 5, 50: sensor section
- 6, 60, 61: pedestal
- 7, 70, 70A, 70B, 71, 72: spring groove (recess)
- 8x, 8y: convex portion
- 9: seat device
- 10A, 10B: first electrode sheet
- 11: first insulating sheet
- 14A to 14F: first electrode
- 16A to 16E: first wire
- 20A, 20B: second electrode sheet
- 21: second insulating sheet
- 24A to 24F: second electrode
- 26A, 26B: second wire
- 30A, 30B: spacer
- 34A to 34F: opening
- 36A to 36F: slit
- 40A to 40F: pressure sensitive switch
- 42A, 42B: terminal
- 51, 52: cushion member
- 55: first sensor section
- 56: second sensor section
- 65: first pedestal
- 66: second pedestal
- 91: seat frame
- 92: support spring
- 93: cushion pad
- 96: backrest
- 101A, 101B: frame member

## Claims

1. A seating sensor comprising:
a pedestal that is fixed to at least one of a plurality of springs stretched out in an opening surrounded by a seat frame and formed of wire rods including bent portions; and
pressure sensitive switches that are disposed on the pedestal,
wherein the pedestal includes a non-linear recess to which the bent portions of one or more springs are fitted.

2. The seating sensor according to claim 1,
wherein the recess is formed in a non-linear shape so that the bent portion of the one spring is fitted to the recess.

3. The seating sensor according to claim 2,
wherein the recess is formed in a non-linear shape so that one of the bent portions is fitted to the recess.

4. The seating sensor according to any one of claims 1 to 3, further comprising:
frame members that are connected to the pedestal and are provided at portions facing each other with at least the pressure sensitive switches interposed therebetween,
wherein upper ends of the frame members are positioned above an upper surface of the pressure sensitive switch.

5. The seating sensor according to claim 4,
wherein the frame members are formed of a pair of frame members that face each other with the pressure sensitive switches interposed therebetween.

6. The seating sensor according to any one of claims 1 to 5,
wherein the recess is formed in the shape of a groove, and the width of a portion where the width of the groove becomes maximum is substantially the same as the diameter of the spring.

7. The seating sensor according to any one of claims 1 to 6, further comprising:
a cushion member that is provided between the pedestal and the pressure sensitive switch disposed close to a seating surface of the pedestal.

8. The seating sensor according to any one of claims 1 to 7, further comprising:
a pair of the pedestals; and
a pair of pressure sensitive switches that are disposed on the respective pedestals,
wherein the pressure sensitive switch includes
a pair of insulating sheets having flexibility,
a sheet-like spacer which is interposed between the pair of insulating sheets and in which an opening is formed, and
a pair of electrodes that are provided on surfaces of the pair of insulating sheets and face each other through the opening, and
the spacers of the pair of pressure sensitive switches disposed on the respective pedestals are connected to each other and the pair of insulating sheets are connected to each other.

9. The seating sensor according to any one of claims 1 to 7, further comprising:
a plurality of the pedestals;
a plurality of pressure sensitive switches that disposed on the respective pedestals; and
conductive wires that have flexibility and connect the respective pressure sensitive switches.

10. The seating sensor according to any one of claims 1 to 7,
wherein one pedestal is used as the pedestals.

11. The seating sensor according to claim 10,
wherein one pressure sensitive switch is used as the pressure sensitive switches.

12. A seat device comprising:
a plurality of springs that are stretched out in an opening surrounded by a seat frame and are formed of wire rods including a plurality of bent portions;
a cushion pad that is placed on the plurality of springs; and
the seating sensor according to any one of claims 1 to 11.

13. The seat device according to claim 12,
wherein the frame members are formed of a pair of frame members that face each other with the pressure sensitive switches interposed therebetween, and the pair of frame members are disposed along a front-and-rear direction of the cushion pad.

14. The seat device according to claim 12,
wherein the frame members are formed of a pair of frame members that face each other with the pressure sensitive switches interposed therebetween, and the pair of frame members are disposed along a left-and-right direction of the cushion pad.

15. The seat device according to any one of claims 12 to 14,
wherein pad recesses are formed on a lower surface of the cushion pad above the frame members and the pressure sensitive switches, and at least the frame members are received in the pad recesses.
